(19) 

Europäisches
Patentamt
European
Patent Office
Office européen
des brevets

(11) **EP 4 560 942 A1**

(12) **EUROPEAN PATENT APPLICATION**
published in accordance with Art. 153(4) EPC

(43) Date of publication:
**28.05.2025 Bulletin 2025/22**

(21) Application number: **23845250.2**

(22) Date of filing: **30.06.2023**

(51) International Patent Classification (IPC):
**H04B 13/02** (2006.01)

(52) Cooperative Patent Classification (CPC):
**H04B 13/02**

(86) International application number:
**PCT/CN2023/105315**

(87) International publication number:
**WO 2024/022037 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.07.2022 CN 202210897324
28.07.2022 CN 202221969103 U
28.07.2022 CN 202221974639 U
28.07.2022 CN 202221973718 U
24.11.2022 CN 202211486705
24.11.2022 CN 202223234601 U

(71) Applicant: **Divintok Technology Pte. Ltd.
Kunming, Yunnan 650000 (CN)**

(72) Inventors:
• **SHEN, Wenyan
Kunming, Yunnan 650100 (CN)**
• **LI, Chun
Kunming, Yunnan 650100 (CN)**
• **DAI, Honglin
Kunming, Yunnan 650100 (CN)**
• **WANG, Xuean
Kunming, Yunnan 650100 (CN)**
• **WANG, Xiong
Kunming, Yunnan 650100 (CN)**
• **YAN, Fei
Kunming, Yunnan 650100 (CN)**

(74) Representative: **Cleanthous, Marinos
4 Prometheus Street, 3 Floor
1065 Nicosia (CY)**

(54) **ANTI-FULL-THROAT DIVING DEVICE, AND UNDERWATER COMMUNICATION DEVICE AND MANUFACTURING METHOD AND COMMUNICATION METHOD THEREFOR**

(57) The present invention discloses an anti-full-throat diving device, an underwater communication device, a manufacturing method and a communication method therefor. The underwater communication device comprises a holding unit, a microphone unit and a housing. Among them, the housing has a chamber, a passage opening, an aperture, a front-facing side, and a noise reduction part. The passage opening and the aperture are respectively connected to the chamber. The aperture defines the front-facing side, and the noise reduction part is set on the inner wall of the housing for defining the chamber. The microphone unit is set in the chamber of the housing, and the holding unit is set in the housing.

Figure 3A

**EP 4 560 942 A1**

## Description

**Technical field**

The present invention relates to the field of diving technology, particularly to an anti-full-throat diving device, an underwater communication device, a manufacturing method therefor, and a communication method therefor.

**Background technology**

In recent years, diving activities have become increasingly popular. Constrained by the underwater environment, divers are unable to communicate directly through shouting, and the gesture communication is of poor accuracy and easily affected by visibility, resulting in poor communication quality between divers and others. In severe cases, it can even endanger the divers' lives. Therefore, how to assure the communication quality between divers and others is the technical problem that the inventor of the present invention is committed to solving.

**Contents of the invention**

One objective of the present invention is to provide an anti-full-throat diving device, an underwater communication device, a manufacturing method therefor, and a communication method therefor, wherein the underwater communication device can ensure the communication quality between divers and others, in order to improve the communication efficiency between divers and others.

One objective of the present invention is to provide an anti-full-throat diving device, an underwater communication device, a manufacturing method therefor, and a communication method therefor, wherein the housing of the underwater communication device is used to hold a microphone unit in front of the mouth of a diver, so that sound waves emitted by the diver can be collected by the microphone unit, which will facilitate communication between the diver and others through the underwater communication device in the subsequent process.

One objective of the present invention is to provide an anti-full-throat diving device, an underwater communication device, a manufacturing method therefor, and a communication method therefor, wherein the housing is configured to attenuate the energy of the part of the sound waves emitted by the diver that reaches the inner wall of the housing, in order to reduce the energy of the part of the sound waves emitted by the diver that is reflected by the inner wall of the housing to the microphone unit, thereby reducing noise and improving the microphone collected sound clarity of the microphone unit, thereby improving the communication quality between the diver and others.

One objective of the present invention is to provide an anti-full-throat diving device, an underwater communication device, a manufacturing method therefor, and a communication method therefor, wherein the housing is configured to be that the part of the sound wave emitted by the diver that reaches the inner wall of the housing is reflected in a direction away from the microphone unit, so as to reduce the part of the sound wave emitted by the diver being reflected by the inner wall of the housing that reaches the microphone unit, thereby reducing noise and improving the clarity of the microphone, thereby improving the communication quality between the diver and others.

One objective of the present invention is to provide an anti-full-throat diving device, an underwater communication device, a manufacturing method therefor, and a communication method therefor, wherein a noise reduction part is provided at the inner wall of the housing; the noise reduction part is configured to attenuate the energy of the part of the sound waves emitted by the diver that reaches the inner wall of the housing, and/ or the noise reduction part is configured to be that the part of the sound wave emitted by the diver that reaches the inner wall of the housing is reflected in a direction away from the microphone unit, thereby reducing noise and improving the clarity of the microphone's reception in the subsequent process, thereby improving the communication quality between the diver and others.

One objective of the present invention is to provide an anti-full-throat diving device, an underwater communication device, a manufacturing method therefor, and a communication method therefor, wherein the noise reduction part of the housing protrudes from the inner wall, so that when the sound waves emitted by the diver reach the inner wall of the housing, a part of the sound waves reaching the inner wall of the housing are reflected by the noise reduction part of the housing in a direction away from the microphone unit, and another part of the sound waves reaching the inner wall of the housing are continuously reflected by the noise reduction part of the housing to attenuate energy, thereby reducing noise and improving the clarity of the microphone's reception in the subsequent process, thereby improving the communication quality between the diver and others.

One objective of the present invention is to provide an anti-full-throat diving device, an underwater communication device, a manufacturing method therefor, and a communication method therefor, wherein the noise reduction part of the housing is encrusted in the inner wall, so that when the sound waves emitted by the diver reach the inner wall of the housing, a part of the sound waves reaching the inner wall of the housing are reflected by the noise reduction part of the housing in a direction away from the microphone unit or are captured by the noise reduction part and continuously reflected in the noise reduction part until the energy attenuation is complete, and another part of the sound waves reaching the inner wall of the housing are continuously reflected by the noise reduction part of the housing to attenuate energy, thereby reducing noise and improving the clarity of the microphone's reception in the subsequent process, thereby improving the communication quality between the diver and others.

One objective of the present invention is to provide an anti-full-throat diving device, an underwater communication device, a manufacturing method therefor, and a communication method therefor, wherein the size of the housing gradually decreases outward from the front-facing side of the housing, so that the chamber of the housing gradually collapses, and the speaker unit is held at the bottom of the chamber of the housing. In this way, On one hand, the housing has the function of gathering sound waves of divers, and on the other hand, the housing holds the speaker unit at a position away from the front-facing side of the housing, which is conducive to improving the noise reduction effect of the noise reduction part of the housing.

One objective of the present invention is to provide an anti-full-throat diving device, an underwater communication device, a manufacturing method therefor, and a communication method therefor, wherein the underwater communication device provides a holding unit configured to hold the housing in front of the mouth of a diver. For example, in some embodiments, the holding unit holds the housing in front of the diver's mouth by restraining the diver's head. While in other embodiments, the holding unit holds the housing in front of the diver's mouth by allowing the diver to bite it with their teeth.

One objective of the present invention is to provide an anti-full-throat diving device, an underwater communication device, a manufacturing method therefor, and a communication method therefor, wherein the holding unit holds the housing in front of the diver's mouth by allowing the diver to bite it with their teeth, so that the underwater communication device allows the diver to operate with one hand and can be worn in front of the diver's mouth in a short time, which is particularly effective for underwater rescue.

One objective of the present invention is to provide an anti-full-throat diving device, an underwater communication device, a manufacturing method therefor, and a communication method therefor, wherein the clamping part of the housing is not only used to achieve the assembly of the holding unit and the assembly of the housing, but also to attenuate the energy of the part of the sound waves emitted by the diver that reaches the inner wall of the housing and/or be reflected in a direction away from the microphone unit, thereby reducing noise and improving communication quality in the subsequent process.

One objective of the present invention is to provide an anti-full-throat diving device, an underwater communication device, a manufacturing method therefor, and a communication method therefor, wherein the anti-full-throat diving device can prevent gas entering the mask body through the secondary head from directly entering the oral cavity of the diver, to prevent gas entering the mask body through the secondary head from impacting the diver's throat.

One objective of the present invention is to provide an anti-full-throat diving device, an underwater communication device, a manufacturing method therefor, and a communication method therefor, wherein a diver holds the mask body in front of the mouth by biting the mouthpiece of the anti-full-throat diving device with teeth, so that when gas enters the mask body through the secondary head, the diver's teeth can block the gas to prevent the gas entering the mask body through the secondary head from directly entering the diver's oral cavity, thereby avoiding the gas entering the mask body through the secondary head from impacting the diver's throat.

One objective of the present invention is to provide an anti-full-throat diving device, an underwater communication device, a manufacturing method therefor, and a communication method therefor, wherein when a diver holds the mask body in front of the mouth by biting the mouthpiece with teeth, his lips are closed, foring a gap between his top and bottom teeth, so that the diver's teeth can block the gas to prevent the gas entering the mask body through the secondary head from directly entering the diver's oral cavity, thereby avoiding the gas entering the mask body through the secondary head from impacting the diver's throat.

One objective of the present invention is to provide an anti-full-throat diving device, an underwater communication device, a manufacturing method therefor, and a communication method therefor, wherein a holding component for connecting the mouthpiece and the mask body of the throat protection diving is held between the secondary head and the mouthpiece, so that the holding component can disperse the gas entering the mask body through the secondary head, to avoid the gas entering the mask body through the secondary head from directly entering the oral cavity of the diver.

One objective of the present invention is to provide an anti-full-throat diving device, an underwater communication device, a manufacturing method therefor, and a communication method therefor, wherein the holding component provides a holding element and an anti-impact plate set on the holding element; there is an internal angle between the plane where the holding element is located and the plane where the anti-impact plate is located (i.e., the angle between the plane where the holding element is located and the plane where the anti-impact plate is located is less than 180°); the secondary head is installed obliquely, and the outlet of the secondary head is aligned with the connection position between the holding element and the anti-impact plate, so that the holding component can disperse the gas entering the mask body through the secondary head.

One objective of the present invention is to provide an anti-full-throat diving device, an underwater communication device, a manufacturing method therefor, and a communication method therefor, wherein the mouthpiece is detachable to allow for replacement of the mouthpiece, thereby ensuring the hygiene of the anti-full-throat diving device. Preferably, the mouthpiece can be detached and installed by rotating, to prevent the mouthpiece from automatically falling off when the diver wear the anti-full-throat diving device, thereby ensuring the diving safety of the diver.

Based on its one aspect, the present invention provides underwater communication device comprising:

A holding unit;
A microphone unit; and
A housing, wherein the housing features a chamber, a passage opening, an aperture, a front-facing side, and a noise reduction part. The passage opening and the aperture are respectively connected to the chamber, and the aperture defines the front-facing side. The noise reduction part is disposed on the inner wall of the housing that defines the chamber. The microphone unit is installed within the chamber of the housing, and the holding unit is mounted on the housing.

Based on its another aspect, the present invention further provides communication method of underwater communication device, wherein the communication method comprises the following steps:

(A) The housing of an underwater communication device is designed to be retained in front of a diver's mouth; and
(B) When the diver emits sound waves, a part of these waves directly reaches the microphone unit of the underwater communication device located in the chamber of the housing. Another part can be reflected by the noise reduction part of the housing before reaching the microphone unit, while yet another part is directed away from the microphone unit after being reflected by the noise reduction part of the housing.

**Description on the attached figures**

Figure 1A is a three-dimensional schematic diagram of underwater communication device based on preferred embodiment of the present invention.
Figure 1B is a three-dimensional schematic diagram of the underwater communication device based on the abovementioned preferred embodiment of the present invention.
Figure 2 is a sectional schematic diagram of underwater communication device based on the abovementioned preferred embodiment of the present invention.
Figure 3A is a schematic diagram of usage status of the underwater communication device based on the abovementioned preferred embodiment of the present invention.
Figure 3B is an enlarged schematic diagram of a partial position of Figure 3A.
Figure 4 illustrates the relationship between the frequency of sound waves emitted by divers, the roughness of the inner wall of the housing, and the clarity of microphone collected sound.
Figure 5 is a sectional schematic diagram of a modified sample of the underwater communication device based on the abovementioned preferred embodiment of the present invention.
Figures 6A and 6B are three-dimensional schematic diagrams of underwater communication device based on another preferred embodiment of the present invention from different perspectives.
Figures 7A and 7B are exploded schematic diagrams of the underwater communication device based on the abovementioned preferred embodiment of the present invention from different perspectives.
Figure 8A is a sectional schematic diagram of a position of the underwater communication device based on the abovementioned preferred embodiment of the present invention.
Figure 8B is a sectional schematic diagram of a position of the partial underwater communication device based on the abovementioned preferred embodiment of the present invention.
Figures 9A and 9B are sectional schematic diagrams of the underwater communication device based on the abovementioned preferred embodiment of the present invention from different perspectives.
Figures 10A and 10B are sectional schematic diagrams of another position of the underwater communication device based on the abovementioned preferred embodiment of the present invention, respectively, showing different states of the underwater communication device.
Figure 11 is an enlarged schematic diagram of the partial position of the inner wall of the housing of the underwater communication device based on the abovementioned preferred embodiment of the present invention.
Figure 12 is a three-dimensional schematic diagram of local structure of the underwater communication device based on the abovementioned preferred embodiment of the present invention.
Figure 13 is the exploded schematic diagram of local structure of the underwater communication device based on the abovementioned preferred embodiment of the present invention.

Figure 14A illustrates the relationship between the roughness of the inner wall of the housing and the clarity of the microphone collected sound when the frequency of the sound wave is 800Hz.

Figure 14B illustrates the relationship between the roughness of the inner wall of the housing and the clarity of the microphone collected sound when the frequency of the sound wave is 1,000Hz.

Figure 14C illustrates the relationship between the roughness of the inner wall of the housing and the clarity of the microphone collected sound when the frequency of the sound wave is 2,000Hz.

Figure 15 is a sectional schematic diagram of the microphone of the underwater communication device based on the abovementioned preferred embodiment of the present invention.

Figures 16A and 16B are three-dimensional schematic diagrams of an anti-full-throat diving device based on a preferred embodiment of the present invention from different perspectives.

Figures 17A and 17B are sectional schematic diagrams of different local positions of the anti-full-throat diving device based on the abovementioned preferred embodiment of the present invention, respectively.

Figure 18 is a three-dimensional schematic diagram of a diving mask of the anti-full-throat diving device based on the abovementioned preferred embodiment of the present invention.

Figures 19A and 19B are exploded schematic diagrams of the diving mask of the anti-full-throat diving device based on the abovementioned preferred embodiment of the present invention from different perspectives.

Figures 20A and 20B are sectional schematic diagrams of the diving mask of the anti-full-throat diving device based on the abovementioned preferred embodiment of the present invention from different perspectives.

Figure 21 is a sectional schematic diagram of the mask body of a diving mask of the anti-full-throat diving device based on the abovementioned preferred embodiment of the present invention.

Figure 22 is a three-dimensional schematic diagram of the mouthpiece part of the diving mask of the anti-full-throat diving device based on the abovementioned preferred embodiment of the present invention. Figure 23 is an exploded schematic diagram of the mouthpiece part of the diving mask of the anti-full-throat diving device based on the abovementioned preferred embodiment of the present invention.

Figure 24 is a three-dimensional schematic diagram of the anti-full-throat diving device connected to a compressed gas cylinder based on the abovementioned preferred embodiment of the present invention.

Figure 25 is a schematic diagram of usage status of the anti-full-throat diving device based on the abovementioned preferred embodiment of the present invention.

Figure 26 is an enlarged schematic diagram of a partial position of Figure 25.

**Specific embodiment**

Before detailing any embodiments of the present invention, it should be understood that the present invention is not limited in its application to the construction and arrangement details of the components described or illustrated in the following attached figures. The present invention can have other embodiments and can be practiced or carried out in various ways. Furthermore, it should be understood that the wording and terminology used here are for descriptive purposes and should not be considered restrictive. The use of the terms "including", "include" or "have" and their variations in this article is intended to encompass the items and their equivalents listed below, as well as additional items. Unless otherwise specified or limited, the terms "installation", "connection", "support" and "linkage", as well as their variations, are widely used and encompass both direct and indirect installation, connection, support and linkage. In addition, "connection" and "linkage" are not limited to physical or mechanical connections or linkages.

Moreover, firstly, the terms "longitudinal", "transverse", "up", "down", "front", "back", "left", "right", "vertical", "horizontal", "top", "bottom", "inside", "outside" and other directional or positional relationships indicated in the disclosure of the present invention are based on the directional or positional relationships shown in the attached figures,

Only for the convenience of describing the present invention and simplifying the description, not indicating or implying that the device or element referred to must have a specific orientation, and be constructed and operated in a specific orientation. Therefore, the above terms cannot be understood as limitations of the present invention; Secondly, the term "one" should be understood as "at least one" or "one or more", meaning that in one embodiment, the element quantity can be one, while the element quantity can be multiple in another embodiment. The term "one" cannot be understood as a limitation on the quantity.

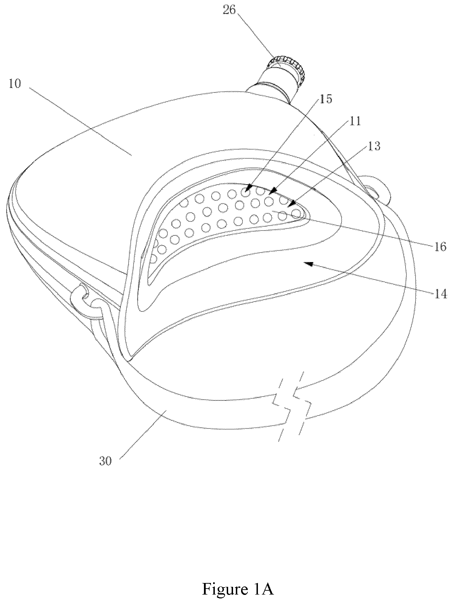

Referring to Figures 1A to 3B attached to the Specification of the present invention, an underwater communication device based on a preferred embodiment of the present invention will be disclosed and introduced in the following description. The underwater communication device comprises a housing 10, a microphone unit 20, and a holding unit 30. The microphone unit 20 and the holding unit 30 are respectively set on the housing 10. The holding unit 30 is set to hold the housing 10 in front of the diver's mouth, so as to hold the microphone unit 20 in front of the diver's mouth. Therefore, when the diver speaks and emits sound waves, the sound waves emitted by the diver can be collected by the microphone unit 20, which will facilitate communication between the diver and others through the underwater communication device in the subsequent process.

Specifically, the housing 10 features a chamber 11, a passage opening 12, an aperture 13, a front-facing side 14, and a noise reduction part 15. The passage opening 12 of the housing 10 is connected to the chamber 11, wherein the passage opening 12 of the housing 10 is set to be able to connect to a gas cylinder, so as to supplement gas to the chamber 11 of the housing 10 through the passage opening 12 of the housing 10 for divers to breathe. The aperture 13 of the housing 10 is connected to the chamber 11 and defines the front-facing side 14. Preferably, the passage opening 12 and the aperture 13 are situated on opposite sides of the housing 10. The noise reduction part 15 of the housing 10 is disposed on the inner wall 16 of the housing 10 that defines the chamber 11, aimed at enhancing the communication quality of the underwater communication device by reducing noise. The microphone unit 20 is placed within the chamber 11 of the housing 10, while the holding unit 30 is affixed to the housing 10.

In the specific sample of the underwater communication device shown in attached Figures 1A to 3B, the holding unit 30 may be strip shaped, with its opposite ends respectively set on the opposite sides of the housing 10. For example, the opposite sides of the housing 10 are respectively provided with an installation ring 19, and the opposite ends of the holding unit 30 are respectively installed on the mounting ring 19 of the housing 10, allowing the opposite ends of the holding unit 30 to be respectively set on the opposite sides of the housing 10; or, the opposite ends of the holding unit 30 can be integrally connected to the opposite sides of the housing 10. The holding unit 30 allows the underwater communication device to be worn on the head of the diver by binding on the diver's head, in order to keep the housing 10 in front of the diver's mouth.

Preferably, the length of the holding unit 30 is adjustable to make the underwater communication device applicable to divers with different head diameters, thereby meeting the usage needs of different divers. For example, in some embodiments, the holding unit 30 has elasticity, allowing the holding unit 30 to bind on the head of diver, so that the diver wears the underwater communication device.

When the underwater communication device is worn by the diver, the front-facing side 14 of the housing 10 is fit to the diver's face, and the diver's mouth corresponds to the aperture 13 of the housing 10, as follows: On one hand, the diver can breathe the air inside the chamber 11 of the housing 10. On the other hand, sound waves emitted by the diver when speaking can enter the chamber 11 of the housing 10 to be captured by the microphone unit 20 of the chamber 11 of the housing 10, which will facilitate communication between the diver and others in the subsequent process.

To enable the front-facing side 14 of the housing 10 to fit to the face of the diver and close the aperture 13 of the housing 10 by the diver's face, on one hand, the front-facing side 14 of the housing 10 is designed as an arc that adapts to the curvature of the face; on the other hand, the front-facing side 14 of the housing 10 is deformable so that when the diver wears the underwater communication device, the shape of the front-facing side 14 of the housing 10 can be automatically adjusted slightly based on the diver's facial arc to allow the diver's face to close the aperture 13 of the housing 10. In this way, when the diver equipped with the underwater communication device is diving, water is prevented from entering the chamber 11 of the housing 10 between the housing 10 and the diver's face.

Preferably, in the specific sample of the underwater communication device shown in attached Figures 1A to 3B, the housing 10 is made of flexible materials as a whole, for example, the housing 10 may be made of silicone materials, so that the front-facing side 14 of the housing 10 can be deformed. In this way, when a diver wears the underwater communication device, the shape of the front-facing side 14 of the housing 10 can be automatically adjusted slightly based on the diver's facial arc to allow the diver's face to close the aperture 13 of the housing 10.

Preferably, the size of the housing 10 gradually decreases from its front-facing side 14 outwards, causing the chamber 11 of the housing 10 to taper. The microphone unit 20 is retained at the bottom of the chamber 11 of the housing 10, allowing the housing 10 to converge the sound waves emitted by the diver when speaking. Moreover, by positioning the microphone unit 20 far away from the front-facing side 14 of the housing 10, the housing 10 enhances the noise reduction effect of the noise reduction part 15 of the housing 10.

Further referring to attached Figures 1A to 3B, the microphone unit 20 comprises a waterproof housing 21, a microphone 22, and a deformable waterproof bag 23, and the microphone unit 20 has a transduction space 24, wherein the microphone 22 is set in the waterproof housing 21, and the waterproof bag 23 is set in the waterproof housing 21 with the transduction space 24 formed between the waterproof bag 23 and the waterproof housing 21, and the microphone 22 faces the transduction space 24 of the microphone unit 20. The waterproof housing 21 is installed on the housing 10 to retain the microphone unit 20 within the chamber 11 of the housing 10.

It's worth noting that the method of attaching the waterproof housing 21 to the housing 10 is not restricted in the underwater communication device of this invention. For instance, in some embodiments, the waterproof housing 21 is mounted on the housing 10 to retain the microphone unit 20 within the chamber 11 of the housing 10; in other embodiments, the waterproof housing 21 is bonded to the housing 10 to retain the microphone unit 20 within the chamber 11 of the housing 10.

When the diver emits sound waves when speaking, these sound waves strike the waterproof bag 23 of the microphone unit 20, causing it to vibrate at the corresponding frequency. The vibrations of the waterproof bag 23 then agitate the air within the transduction space 24 of the microphone unit 20, inducing it to vibrate at the same frequency. It is understandable that the vibration frequency of the air within the transduction space 24 of the microphone unit 20 corresponds to the frequency of the sound waves emitted by the diver. The microphone 22 collects these sound waves by capturing the vibrations of the air within the transduction space 24 of the microphone unit 20. Furthermore, the microphone 22 converts these vibrations into electrical signals, which are transmitted by the underwater communication device to the outside world to facilitate communication between the diver and others in the subsequent process.

It is understandable that, in embodiments where the microphone unit 20 is not equipped with the waterproof bag 23, when the diver emits sound waves when speaking, the microphone 22 can directly capture these sound waves and convert them into electrical signals, which are transmitted by the underwater communication device to the outside world to facilitate communication between the diver and others in the subsequent process.

Further referring to attached Figures 1A to 3B, the microphone unit 20 further comprises a bag holder 25, and the bag holder 25 has a bag holder space 251, a bag holder opening 252 and a set of bag holder passage 253, wherein the bag holder opening 252 is connected to the bag holder space 251 at the mounting end of the bag holder 25; the set of bag holder passage 253 is respectively connected with the the bag holder space 251 at free end of the bag holder 25 and the set of bag holder passage 253 is distributed in a circular shape. The bag holder 25 is installed on the waterproof housing 21 in a manner that allows a part of the waterproof housing 21 to extend into the bag holder space 251 through the bag holder opening 252. The waterproof bag 23 is then fitted around the exterior of the bag holder 25, with the bag holder 25 maintaining the shape of the waterproof bag 23 to form the transduction space 24 between the waterproof bag 23 and the waterproof housing 21. In other words, the bag holder 25 serves as a skeleton supporting the waterproof bag 23, thereby forming the transduction space 24 between the waterproof bag 23 and the waterproof housing 21.

When the diver emits sound waves when speaking, these sound waves strike the waterproof bag 23 of the microphone unit 20, causing it to deform towards the bag holder space 251 of the bag holder 25 through the bag holder passage 253 of the bag holder 25 at the corresponding frequency. This deformation, in turn, vibrates the air within the transduction space 24 of the microphone unit 20 at the same frequency.

It is worth noting that the method of installing the bag holder 25 and the waterproof housing 21 is not restricted in the underwater communication device of this invention. For instance, in some embodiments, cooperating threaded structures may be provided on the mounting end of the bag holder 25 and the waterproof housing 21 to screw the bag holder 25 onto the waterproof housing 21. The connection between the bag holder 25 and the waterproof housing 21 is waterproofed to prevent water entering the chamber 11 of the housing 10 from penetrating into the transduction space 24 of the microphone unit 20 through the bag holder 25 and the waterproof housing 21. In other embodiments, after a part of the waterproof housing 21 extends into the bag holder space 251 through the bag holder opening 252 of the bag holder 25, ultrasonic welding is used to weld the bag holder 25 and the waterproof housing 21 for their reliable attachment, also preventing water entering the chamber 11 of the housing 10 from penetrating into the transduction space 24 of the microphone unit 20 through the bag holder 25 and the waterproof housing 21.

Further referring to attached Figures 1A to 3B, the microphone unit 20 further comprises a magnetic switch 26 which is operable to be installed on the waterproof housing 21, and the microphone 22 is controllable to be connected to the magnetic switch 26. The housing 10 has a switch passage 17 which is connected to the chamber 11. Among them, the magnetic switch 26 of the microphone unit 20 extends from the chamber 11 of the housing 10 to the outside of the housing 10 through the switch passage 17 of the housing 10, so as to expose a part of the magnetic switch 26 to the outer wall of the housing 10, thus making it easier for divers wearing the underwater communication device to operate.

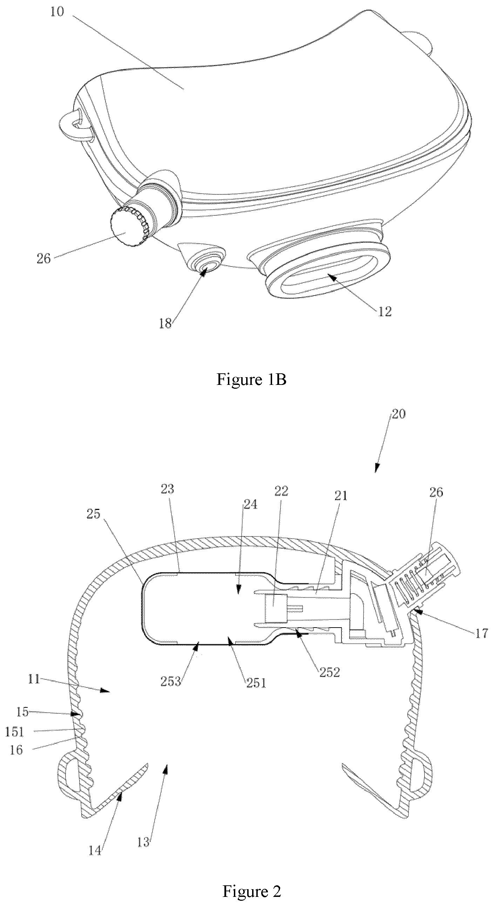

Further referring to attached Figure 1B, the housing 10 further has a wire passage 18 which is connected to the chamber 11. Among them, one wire for connecting to the microphone 22 of the microphone unit 20 can extend from the chamber 11 of the housing 10 to the outside of the housing 10 through the wire passage 18 of the housing 10.

Further referring to attached Figures 1A to 3B, the inner wall 16 of the housing 10 has the noise reduction part 15, as follows: On one hand, the housing 10 attenuates the energy of the part of the sound waves emitted by the diver that reaches the inner wall 16 of the housing 10, to reduce the energy reflected by the inner wall 16 of the housing 10 to the microphone unit 20, thereby reducing noise. On the other hand, the housing 10 reflects the part of the sound waves emitted by the diver that reaches the inner wall 16 of the housing 10 in a direction away from the microphone unit 20, to reduce the noise caused by the reflection of the sound waves emitted by the diver by the inner wall 16 of the housing 10 to the microphone unit 20. Therefore, when the diver speaks and emits sound waves, the microphone unit 20 can collect purer sound waves to improve the communication quality of the underwater communication device.

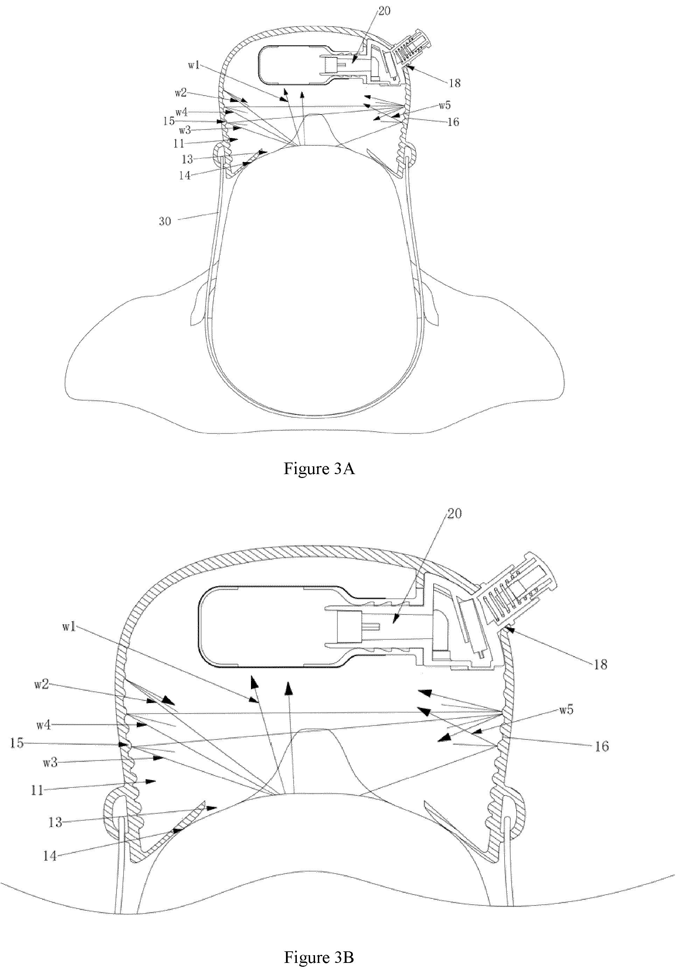

Preferably, referring to attached Figures 2 to 3B, the noise reduction part 15 of the housing 10 is a protrusion 151 from the inner wall 16, that is, the inner wall 16 of the housing 10 is arranged with a series of mutually spaced protrusions 151. Referring to Figures 3A and 3B, when diver speaks and emits sound waves, the sound waves w1 directly reach the microphone unit 20 and are collected by the microphone unit 20; Sound wave w2, upon reaching the left-side part of the inner wall 16 of the housing 10 as depicted in attached Figure 3B, is reflected by the protrusion 151 in a direction away from the microphone unit 20. The sound wave w3 is reflected by the protrusion 151 towards the part of the inner wall 16 of the housing 10 on the left side of attached Figure 3B after reaching the part of the inner wall 16 of the housing 10 on the right side of attached Figure 3B, and is reflected by the protrusion 151 towards the direction away from the microphone unit 20 after reaching the part of the inner wall 16 of the housing 10 located on the right side of attached Figure 3B; The sound wave w4 is reflected by the protrusion 151 towards the part of the inner wall 16 of the housing 10 on the left side of attached Figure 3B after reaching the part of the inner wall 16 of the housing 10 on the right side of attached Figure 3B, and is reflected by the protrusion 151 towards the direction away from the microphone unit 20 after reaching the part of the inner wall 16 of the housing 10 located on the right side of attached Figure 3B, thereby reaching the microphone unit 20 and being collected by the microphone unit 20; The sound wave w5 is reflected towards the microphone unit 20 by the protrusion 151 after reaching the part of the inner wall 16 of the housing 10 on the right side of attached Figure 3B, thereby reaching the microphone unit 20 and being collected by the microphone unit 20.

In other words, a series of mutually spaced protrusions 151 are set on the inner wall 16 of the housing 10, so that when diver speaks and emits sound waves, the sound waves w2 and w3 are reflected away from the microphone unit 20 by the protrusions 151 of the housing 10 and cannot reach the microphone unit 20, to reduce the part of sound waves emitted by the diver that are reflected by the inner wall 16 of the housing 10 to the microphone unit 20, thereby reducing noise. Furthermore, sound waves w4 and w5 require multiple reflections of the inner wall 16 of the housing 10 before reaching the microphone unit 20. During these multiple reflections, the energy of the sound waves w4 and w5 is substantially attenuated, thereby reducing the energy of the part of the sound waves emitted by the diver when speaking that is reflected by the inner wall 16 of the housing 10 towards the microphone unit 20 and minimizing noise.

It is worth mentioning that the noise reduction effect of the noise reduction part 15 of the housing 10 is related to the density of the protrusions 151 arranged on the inner wall 16 of the housing 10. In other words, the communication quality of the underwater communication device is related to the roughness of the inner wall 16 of the housing 10. By controlling the roughness of the inner wall 16 of the housing 10, the communication quality of the underwater communication device can be regulated.

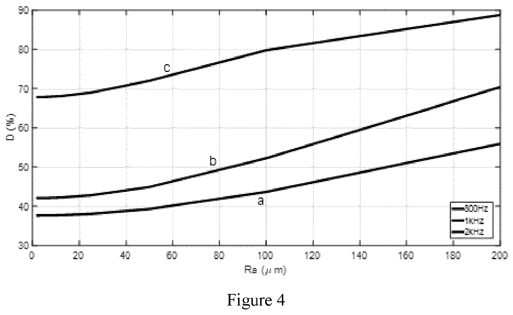

Attached Figure 4 illustrates the relationship between the frequency of sound waves emitted by divers, the roughness of the inner wall 16 of the housing 10, and the collected sound clarity of the microphone unit 20. In the case where the frequency of sound waves emitted by divers remains constant, the clarity of the collected sound of microphone unit 20 increases with the increase of the roughness of the inner wall 16 of the housing 10. By controlling the roughness of the inner wall 16 of the housing 10, the clarity of the microphone unit 20 can be controlled, thereby controlling the communication quality of the underwater communication device.

Specifically, curve a is the curve where the collected sound clarity of the microphone unit 20 increases with the roughness of the inner wall 16 of the housing 10 when the frequency of the sound waves emitted by the diver is 800Hz. Curve b is the curve where the collected sound clarity of the microphone unit 20 increases with the roughness of the inner wall 16 of the housing 10 when the frequency of the sound waves emitted by the diver is 1,000Hz. Curve c is the curve where the collected sound clarity of the microphone unit 20 increases with the increase of roughness of the inner wall 16 of the housing 10 when the frequency of the sound waves emitted by the diver is 2,000Hz. As shown in attached Figure 4, when the frequency of the sound waves emitted by the diver is below 1,000Hz, the relationship between the increase in roughness of the inner wall 16 of the housing 10 and the increase in the collected sound clarity of the microphone unit 20 is characterized by a slow and then fast increase in collected sound clarity of the microphone unit 20; When the frequency of the sound waves emitted by the diver is 2,000Hz, the relationship between the increase in roughness of the inner wall 16 of the housing 10 and the increase in the collected sound clarity of the microphone unit 20 is characterized by a linear relationship.

The collected sound clarity of the microphone unit 20, the roughness of the inner wall 16 of the housing 10, and the frequency of the sound waves need to meet the following conditions, in order to ensure the sound clarity of the microphone unit 20: $D = \frac{100 \cdot Ra}{175.4 - 0.07631 \cdot f + Ra}$ , among them, the parameter of the collected sound clarity of the microphone unit 20 is D; the roughness parameter of the inner wall 16 of the housing 10 is Ra, and the frequency parameter of the sound wave is f.

Preferably, in the specific sample of the underwater communication device shown in attached Figures 1A to 3B, the protruding size of the protrusion 151 of the housing 10 decreases sequentially from the aperture 13 of the housing 10 towards the passage opening 12.

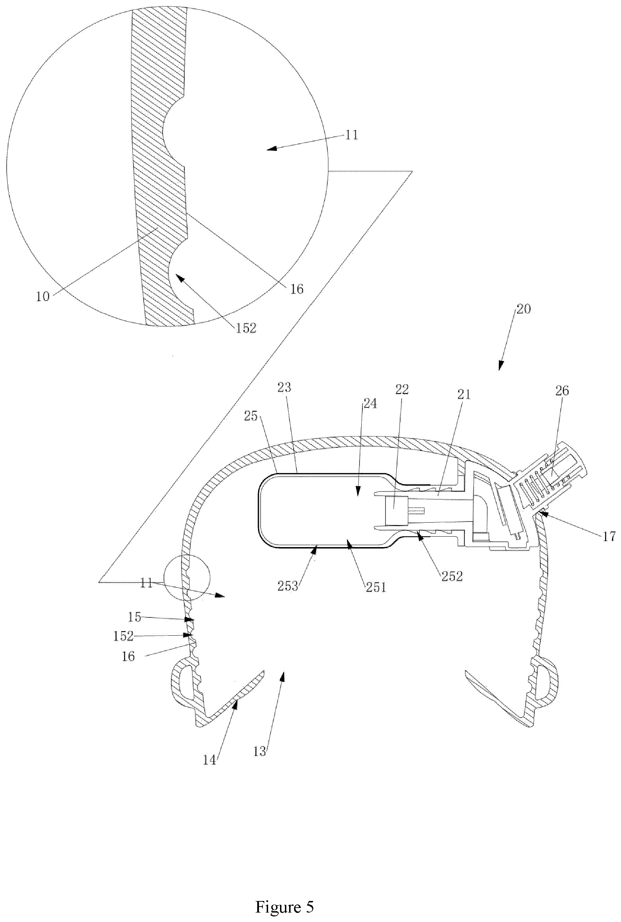

Attached Figure 5 shows a modified sample of the underwater communication device. Unlike the underwater communication device shown in attached Figures 1A to 3, this specific sample of the underwater communication device shown in attached Figure 5 shows that the noise reduction part 15 of the housing 10 is a groove 152 concave in the inner wall 16. That is, the inner wall 16 of the housing 10 is provided with a series of spaced grooves 152, so that when the diver speaks and emits sound waves, the first part of the sound waves (such as the sound wave wl shown in attached Figure 3B) directly reaches the microphone unit 20 and is collected by the microphone unit 20; The second part of the sound wave (such as the sound wave w2 shown in attached Figure 3B) is reflected by the groove 152 in a direction away from the microphone unit 20 after reaching the part of the inner wall 16 of the housing 10 on the left side of attached Figure 5; The third part of the sound wave (such as the sound wave w3 shown in attached Figure 3B) is reflected by the groove 152 towards the part of the inner wall 16 of the housing 10 on the right side of attached Figure 5 after reaching the part of the inner wall 16 of the housing 10 on the left side of attached Figure 3B, and is reflected by the groove 152 towards the direction away from the microphone unit 20 after reaching the part of the inner wall 16 of the housing 10 located on the right side of attached Figure 5; The fourth part of the sound wave (such as the sound wave w4 shown in attached Figure 3B) is reflected by the groove 152 towards the part of the inner wall 16 of the housing 10 on the right side of attached Figure 5 after reaching the part of the inner wall 16 of the housing 10 on the left side of attached Figure 5, and is reflected by the groove 152 towards the microphone unit 20 after reaching the part of the inner wall 16 of the housing 10 on the right side of attached Figure 4, thereby reaching the microphone unit 20 and being collected by the microphone unit 20; The fifth part of the sound wave (such as the sound wave w5 shown in attached Figure 3B) is reflected towards the microphone unit 20 by the groove 152 after reaching the part of the inner wall 16 of the housing 10 on the right side of attached Figure 5, thereby reaching the microphone unit 20 and being collected by the microphone unit 20.

In other words, a series of mutually spaced groove 152 are set on the inner wall 16 of the housing 10, so that when the diver speaks and emits sound waves, the second part of sound waves and the third part of sound waves are reflected away from the microphone unit 20 by the groove 152 of the housing 10 and cannot reach the microphone unit 20, to reduce the part of sound waves emitted by the diver that are reflected by the inner wall 16 of the housing 10 to the microphone unit 20, thereby reducing noise. Moreover, the fourth and fifth parts of the sound waves need to be reflected multiple times by the inner wall 16 of the housing 10 before reaching the microphone unit 20. In the process of being reflected multiple times by the inner wall 16 of the housing 10, the energy of the fourth and fifth parts of the sound waves is greatly attenuated, thereby reducing the energy of the part of the sound waves emitted by the diver when speaking that is reflected by the inner wall 16 of the housing 10 to the microphone unit 20, thereby reducing noise.

It is worth mentioning that the noise reduction effect of the noise reduction part 15 of the housing 10 is related to the density of the groove 152 arranged on the inner wall 16 of the housing 10. In other words, the communication quality of the underwater communication device is related to the roughness of the inner wall 16 of the housing 10. By controlling the roughness of the inner wall 16 of the housing 10, the communication quality of the underwater communication device can be regulated.

Preferably, in the specific sample of the underwater communication device shown in attached Figure 5, the grooving size of the groove 152 of the housing 10 decreases sequentially from the aperture 13 of the housing 10 towards the passage opening 12.

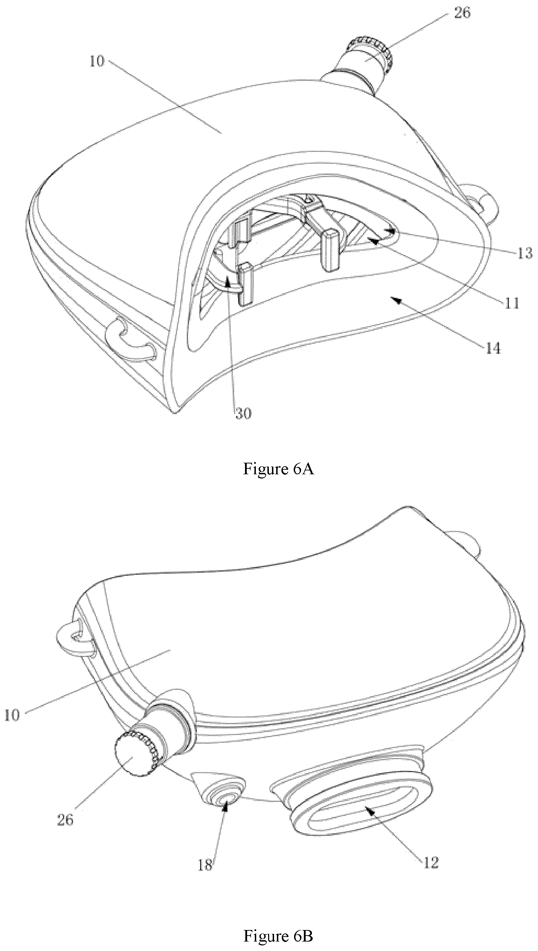

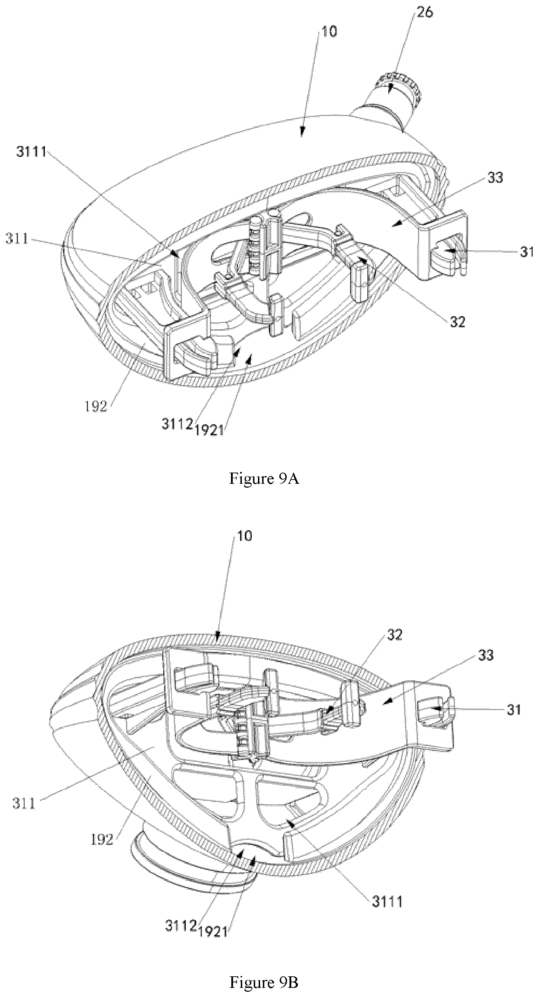

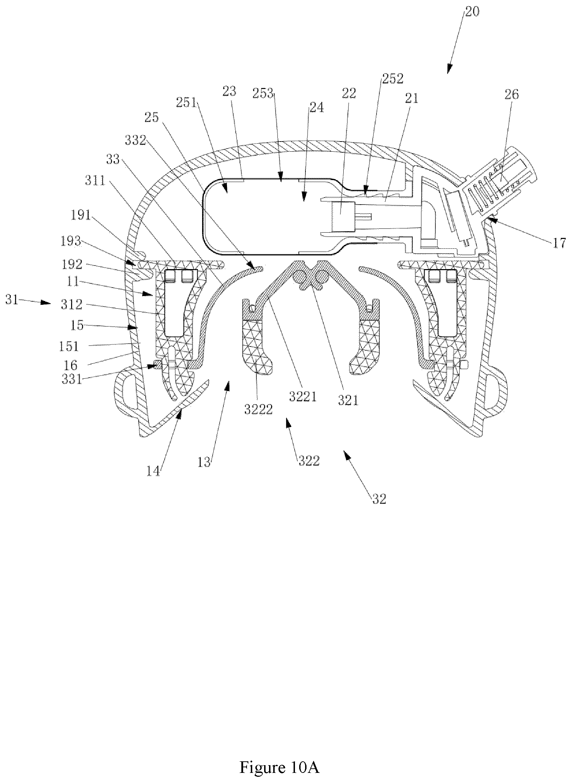

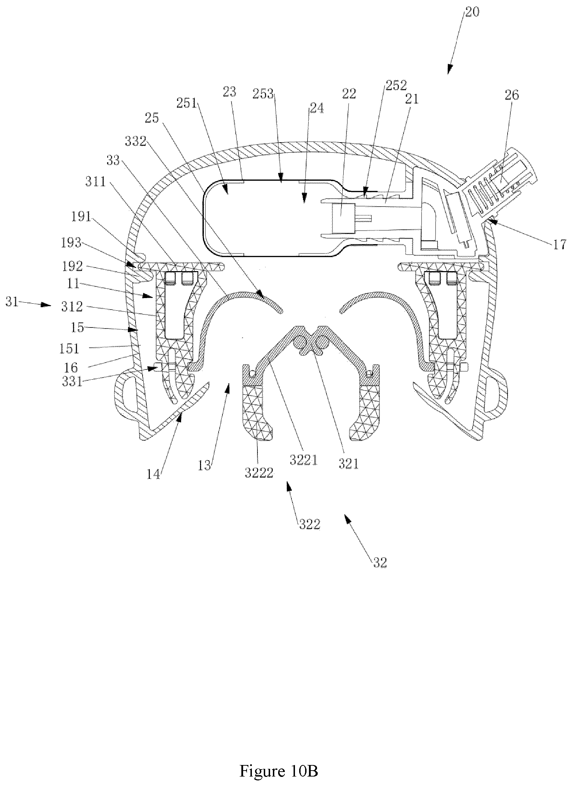

Referring to Figures 6A to 15 attached to the Specification of the present invention, an underwater communication device based on a preferred embodiment of the present invention will be disclosed and introduced in the following description. The underwater communication device comprises a housing 10, a microphone unit 20, and a holding unit 30. The microphone unit 20 and the holding unit 30 are respectively set on the housing 10, wherein the holding unit 30 is set to hold the housing 10 in front of the diver's mouth, so as to hold the microphone unit 20 in front of the diver's mouth. Therefore, when the diver speaks and emits sound waves, the sound waves emitted by the diver can be collected by the microphone unit 20, which will facilitate communication between the diver and others in the subsequent process throught the underwater communication device.

Specifically, the housing 10 comprises a chamber 11, a passage opening 12, an aperture 13, a front-facing side 14, and a noise reduction part 15. The passage opening 12 of the housing 10 is connected to the chamber 11, wherein the passage opening 12 of the housing 10 is set to be able to connect to a gas cylinder, so as to supplement gas to the chamber 11 of the housing 10 through the passage opening 12 of the housing 10 for divers to breathe. The aperture 13 of the housing 10 is connected to the chamber 11 and defines the front-facing side 14. Preferably, the passage opening 12 and the aperture 13 are situated on opposite sides of the housing 10. The noise reduction part 15 of the housing 10 is disposed on the inner wall 16 of the housing 10 that defines the chamber 11, aimed at enhancing the communication quality of the underwater communication device by reducing noise. The microphone unit 20 is placed within the chamber 11 of the housing 10, while the holding unit 30 is affixed to the housing 10.

In the specific sample of the underwater communication device shown in attached Figures 6A to 15, the holding unit 30 holds the housing 10 in front of the diver's mouth by allowing the diver to bite it with their teeth, so that the underwater communication device allows the diver to operate with one hand and can be worn in front of the diver's mouth in a short time, which is particularly effective for underwater rescue.

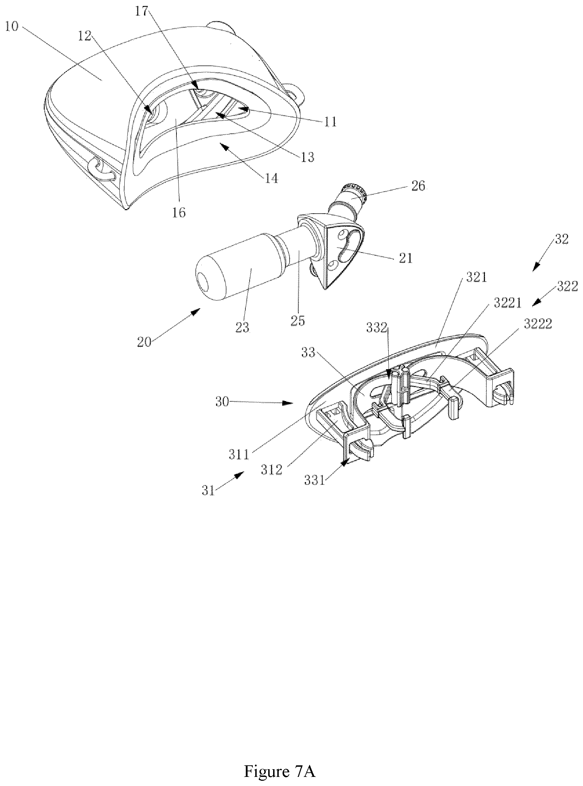

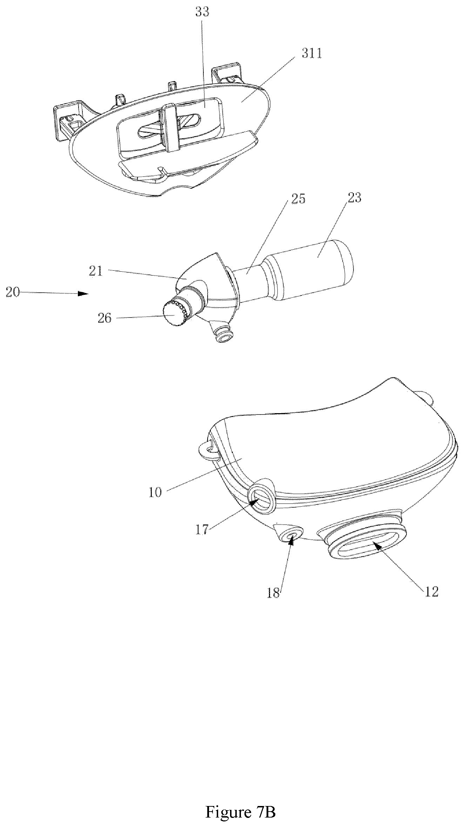

Specifically, referring to attached Figures 7A and 7B, the holding unit 30 comprises an assembly part 31, a mouthpiece part 32, and two elastic arms 33. The assembly part 31 comprises an assembly plate 311, and two extension arms 312, which are symmetrically arranged on opposite sides of the assembly plate 311. The assembly plate 311 is installed on the inner wall 16 of the housing 10 to allow it to be held in the chamber 11 of the housing 10. The mouthpiece part 32 comprises a mounting element 321, and two mouthpiece arms 322 each of which further comprises a diagonal arm 3221 and a straight arm 3222. The diagonal arms 3221 of the two mouthpiece arms 322 extend outward from opposite sides of the mounting element 321 in an integrated and inclined manner, so that the top view of the mounting element 321 and the diagonal arms 3221 of the two mouthpiece arms 322 form a "V" shape. The straight arm 3222 is set at the free end of the diagonal arm 3221. Each elastic arm 33 extends in a curve and forms an elastic outer end 331 and an elastic inner end 332 corresponding to the elastic outer end 331, wherein the elastic outer end 331 of each elastic arm 33 is respectively installed at the free end of each extension arm 312 of the assembly part 31, and the elastic inner end 332 of each elastic arm 33 is respectively installed on the opposite sides of the mounting element 321 of the mouthpiece part 32, and the two elastic arms 33 make the mouthpiece part 32 close to the assembly plate 311 of the assembly part 31 when not under force, and produce elastic deformation when under force, thereby making the mouthpiece part 32 tend to get close to the assembly plate 311 of the assembly part 31.

The assembly plate 311 is mounted in the middle of the inner wall 16 of the housing 10 to separate the chamber 11 of the housing 10 into an internal space 111 and an external space 112. The assembly plate 311 has at least one gas passage 3111 to connect the internal space 111 and the external space 112 of the housing 10. The passage opening 12 of the housing 10 is connected to the internal space 111, and the passage opening 12 of the housing 10 faces the assembly plate 311. The gas in the gas cylinder is replenished to the housing 10 in the following way: Firstly, the gas inside the gas cylinder enters the internal space 111 of the housing 10 through the passage opening 12 of the housing 10. Secondly, the gas entering the internal space 111 of the housing 10 enters the external space 112 through the gas passage 3111 of the assembly plate 311 for the user to breathe. Due to the precise alignment of the passage opening 12 of the housing 10 with the assembly plate 311, when refilling the chamber 11 of the housing 10 with gas from a cylinder, the assembly plate 311 adeptly diverts the airflow entering the chamber 11 through the passage opening 12 of the housing 10, preventing it from impacting directly on the user's mouth, thus mitigating throat irritation.

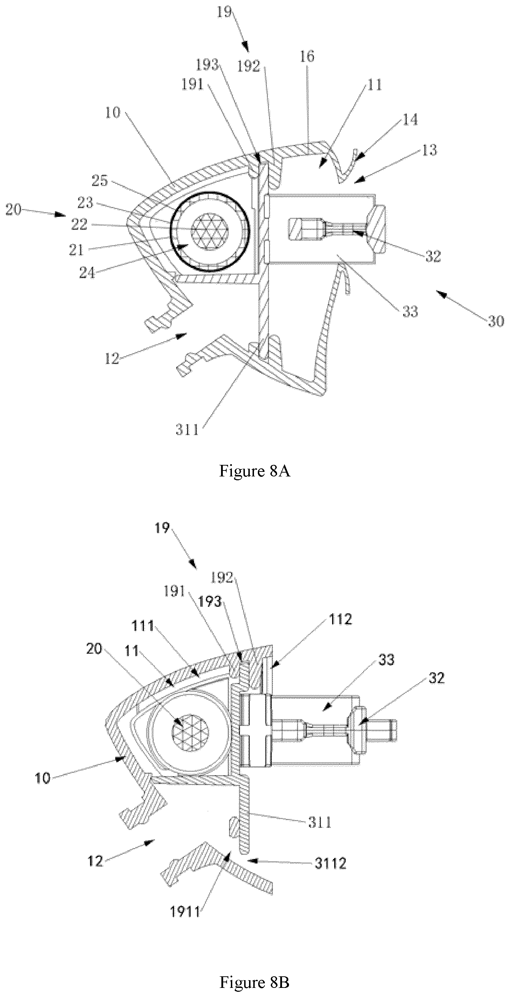

Further referring to attached Figures 8A to 10B, the housing 10 is equipped with a clamping part 19, comprising a first clamping protrusion 191, a second clamping protrusion 192, and a clamping groove 193 formed between them. The first clamping protrusion 191 and the second clamping protrusion 192 are spaced apart on the inner wall 16 of the housing 10. The assembly plate 311 of the assembly part 31 is clamped within the clamping groove 193 of the clamping part 19 of the housing 10, allowing the holding unit 30 to be installed within the chamber 11 of the housing 10. Preferably, the first clamping protrusion 191 and the second clamping protrusion 192 are annular in shape. When the assembly plate 311 of the assembly part 31 is clamped within the clamping groove 193 of the clamping part 19 of the housing 10, the first clamping protrusion 191 and the second clamping protrusion 192 respectively encircle the perimeter of the assembly plate 311, ensuring a secure assembly between the assembly plate 311 of the assembly part 31 and the housing 10.

Further referring to attached Figures 8B to 8B, the first clamping protrusion 191 of the clamping part 19 features a first fluid passage 1911 connecting the internal space 111 of the housing 10 to the clamping groove 193. Similarly, the second clamping protrusion 192 includes a second fluid passage 1921, linking the external space 112 of the housing 10 to the clamping groove 193. The positions of the first fluid passage 1911 and the second fluid passage 1921 correspond to each other. The assembly plate 311 is equipped with a recess 3112, which is connected respectively with both the first fluid passage 1911 of the first clamping protrusion 191 and the second fluid passage 1921 of the second clamping protrusion 192. Consequently, the internal space 111 and the external space 112 of the housing 10 are interconnected through the first fluid passage 1911 of the first clamping protrusion 191, the recess 3112 of the assembly plate 311, and the second fluid passage 1921 of the second clamping protrusion 192. During diving, water entering the external space 112 of the housing 10 can flow sequentially through the second fluid passage 1921 of the second clamping protrusion 192, the recess 3112 of the assembly plate 311, and the first fluid passage 1911 of the first clamping protrusion 191 into the internal space 111 of the housing 10. Subsequently, the water is expelled through the secondary head mounted at the passage opening 12 of the housing 10, effectively preventing water accumulation.

Alternatively, in other embodiments of the underwater communication device of the present invention, the assembly plate 311 may lack the recess 3112. Instead, a gap is formed between the peripheral wall of the assembly plate 311 and the inner wall of the housing 10 defining the clamping groove 193. In this way, water entering the external space 112 of the housing 10 flows through the second fluid passage 1921 of the second clamping protrusion 192 into this gap. The water entering the gap then passes through the first fluid passage 1911 of the first clamping protrusion 191 into the internal space 111 of the housing 10, ultimately being expelled through a secondary head mounted at the passage opening 12 of the housing 10, thus preventing water accumulation.

The process for divers to wear the underwater communication device of the present invention, as illustrated in attached Figures 6A to 15, is as follows: Firstly, with the housing 10 held stationary, a force is applied to the straight arm 3222 of the mouthpiece arm 322 of the mouthpiece part 32, pulling the straight arm 3222 of the mouthpiece arm 322 out of the chamber 11 of the housing 10 through the aperture 13 of the housing 10. At this point, the entire mouthpiece part 32 moves outwardly, causing elastic deformation in each of the elastic arms 33. Consequently, each elastic arm 33 imparts a tendency for the mouthpiece part 32 to move towards the assembly plate 311 of the assembly part 31. Secondly, it is required to bite down on the straight arm 3222 of the mouthpiece arm 322 of the mouthpiece part 32 with teeth. As each elastic arm 33 returns to its original state, it pulls the housing 10 towards the diver's face, enabling the front-facing side 14 of the housing 10 to fit to the diver's face, thereby completing the wearing of the underwater communication device.

In other words, when the underwater communication device is worn by the diver, the front-facing side 14 of the housing 10 is fit to the diver's face, and the diver's mouth corresponds to the aperture 13 of the housing 10, as follows: On one hand, the diver can breathe the air inside the chamber 11 of the housing 10. On the other hand, sound waves remitted by the diver when speaking can enter the chamber 11 of the housing 10 to be captured by the microphone unit 20 of the chamber 11 of the housing 10, which will facilitate communication between the diver and others in subsequent process.

To enable the front-facing side 14 of the housing 10 to fit to the face of the diver and close the aperture 13 of the housing 10 by the diver's face, on one hand, the front-facing side 14 of the housing 10 is designed as an arc that adapts to the curvature of the face, and on the other hand, the front-facing side 14 of the housing 10 is deformable, so that when the diver wears the underwater communication device, the shape of the front-facing side 14 of the housing 10 can be automatically adjusted slightly based on the diver's facial arc to allow the diver's face to close the aperture 13 of the housing 10. In this way, when the diver equipped with the underwater communication device is diving, water is prevented from entering the chamber 11 of the housing 10 between the housing 10 and the diver's face.

Preferably, in the specific sample of the underwater communication device shown in attached Figures 6A to 15, the housing 10 is made of flexible materials as a whole, for example, the housing 10 may be made of silicone materials, so that the front-facing side 14 of the housing 10 can be deformed. In this way, when a diver wears the underwater communication device, the shape of the front-facing side 14 of the housing 10 can be automatically adjusted slightly based on the diver's facial arc to allow the diver's face to close the aperture 13 of the housing 10.

Preferably, the size of the housing 10 gradually decreases from its front-facing side 14 outwards, causing the chamber 11 of the housing 10 to taper. The microphone unit 20 is retained at the bottom of the chamber 11 of the housing 10, allowing the housing 10 to converge the sound waves remitted by the diver when speaking. Moreover, by positioning the microphone unit 20 far from the front-facing side 14 of the housing 10, the housing 10 enhances the noise reduction effect of the noise reduction part 15 of the housing 10.

Preferably, the straight arm 3222 of the mouthpiece arm 322 of the mouthpiece part 32 is detachably mounted to the diagonal arm 3221, allowing for the straight arm 3222 to be replaced, thus ensuring the hygiene of the underwater communication device through replacement of the straight arm 3222.

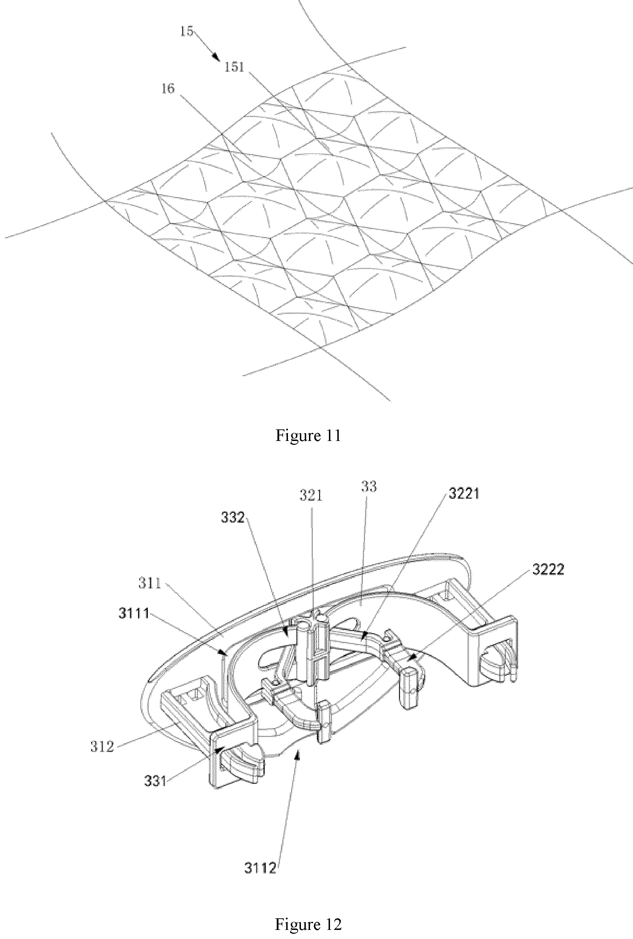

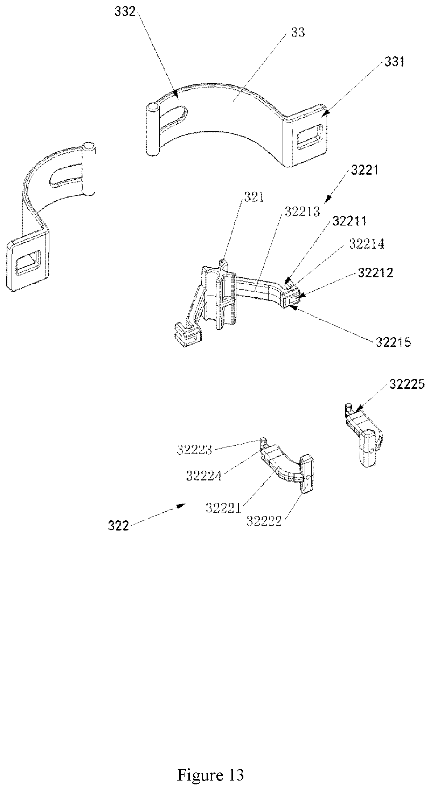

Specifically, with reference to attached Figures 12 and 13, the diagonal arm 3221 features a first direction retaining groove 32211 and a second direction retaining groove 32212, which are interconnected, with the extension directions of the first direction retaining groove 32211 and the second direction retaining groove 32212 being perpendicular to each other. The straight arm 3222 comprises a straight arm body 32221, an anti-detachment protrusion 32222, a first direction retaining post 32223, and a second direction retaining post 32224. The anti-detachment protrusion 32222 is protrusively disposed at one end of the straight arm body 32221, the second direction retaining post 32224 extends integrally from the other end of the straight arm body 32221, and the first direction retaining post 32223 extends integrally from the second direction retaining post 32224, with the extension directions of the first direction retaining post 32223 and the second direction retaining post 32224 being perpendicular to each other. The first direction retaining post 32223 and the second direction retaining post 32224 of the straight arm 3222 are respectively retained in the first direction retaining groove 32211 and the second direction retaining groove 32212 of the diagonal arm 3221, thereby mounting the straight arm 3222 to the diagonal arm 3221.

Specifically, the diagonal arm 3221 further comprises a diagonal arm body 32213 and two retaining arm bodies 32214. The diagonal arm body 32213 extends integrally from the sidewall of the mounting element 321, and the two retaining arm bodies 32214 extend outwardly and backwardly from the free end of the diagonal arm body 32213 in a mutually spaced manner, forming one part of the first direction retaining groove 32211 between one retaining arm body 32214 and the diagonal arm body 32213, and another part of the first direction retaining groove 32211 between the other retaining arm body 32214 and the diagonal arm body 32213. Additionally, the diagonal arm 3221 forms the second direction retaining groove 32212 between the two retaining arm bodies 32214. Preferably, by allowing the two retaining arm bodies 32214 to extend outwardly and backwardly from the free end of the diagonal arm body 32213, the diagonal arm 3221 enables slight deformation of the two retaining arm bodies 32214 of the diagonal arm 3221 during mounting the straight arm 3222 to the diagonal arm 3221, facilitating such attachment of the straight arm 3222 and ensuring the reliability of the mounting between the straight arm 3222 and the diagonal arm 3221.

More specifically, the process of mounting the straight arm 3222 to the diagonal arm 3221 is as follows: Firstly, the first direction retaining post 32223 of the straight arm 3222 is mounted to the first direction retaining groove 32211 of the diagonal arm 3221, while allowing the second direction retaining post 32224 of the straight arm 3222 to align with the second direction retaining groove 32212 of the diagonal arm 32221; Secondly, a torque is applied to the straight arm 3222 by rotating it relative to the diagonal arm 3221 by driving the straight arm 3222, causing the first direction retaining post 32223 of the straight arm 3222 to rotate within the first direction retaining groove 32211 of the diagonal arm 3221 and the second direction retaining post 32224 of the straight arm 3222 to enter the second direction retaining groove 32212 of the diagonal arm 32221. The mounting of the straight arm 3222 is completed when the second direction retaining post 32224 of the straight arm 3222 fully engages within the second direction retaining groove 32212 of the diagonal arm 3221. It is understandable that the straight arm 3222 can be removed from the diagonal arm 3221 by rotating it in the opposite direction relative to the diagonal arm 3221.

It is worth mentioning that when a diver wears the underwater communication device, the straight arm 3222 only experiences tensile forces perpendicular to the assembly plate 311. Due to the blocking effect of the retaining arm bodies 32214 of the diagonal arm 3221, the straight arm 3222 is prevented from detaching from the diagonal arm 3221, ensuring user safety. Additionally, due to the limiting effect of the two retaining arm bodies 32214 of the diagonal arm 3221 on the second direction retaining post 32224 of the straight arm 3222, when the user wears the underwater communication device, the device can prevent the straight arm 3222 from shaking relative to the diagonal arm 3221, thus ensuring user safety.

To further prevent the straight arm 3222 from sliding relative to the diagonal arm 3221, the diagonal arm 3221 further comprises a first fitting surface 32215, which is the front surface of the two retaining arm bodies 32214. The straight arm 3222 further comprises a second fitting surface 32225, which is the end surface of the end of the straight arm body 32221 featuring the second direction retaining post 32224. When the straight arm 3222 is installed on the diagonal arm 3221, the second fitting surface 32225 of the straight arm 3222 and the first fitting surface 32215 of the diagonal arm 3221 are in contact with each other. In this way, through surface-to-surface fitting, the underwater communication device allows the straight arm 3222 to be reliably mounted to the diagonal arm 3221, preventing the straight arm 3222 from detaching from the diagonal arm 3221 when the user wears the underwater communication device and thus ensuring user safety. Moreover, by allowing the second fitting surface 32225 of the straight arm 3222 to fit with the first fitting surface 32215 of the diagonal arm 3221, the angle between the straight arm 3222 and the diagonal arm 3221 remains unchanged when the straight arm 3222 does not experience a sufficiently large torque, ensuring the reliability of the underwater communication device.

Further referring to attached Figures 6A to 15, the microphone unit 20 comprises a waterproof housing 21, a microphone 22, and a deformable waterproof bag 23, and the microphone unit 20 has a transduction space 24, wherein the microphone 22 is set in the waterproof housing 21, and the waterproof bag 23 is set in the waterproof housing 21 with the transduction space 24 formed between the waterproof bag 23 and the waterproof housing 21, and the microphone 22 faces the transduction space 24 of the microphone unit 20. The waterproof housing 21 is installed on the housing 10 to retain the microphone unit 20 within the chamber 11 of the housing 10.

It's worth noting that the method of attaching the waterproof housing 21 to the housing 10 is not restricted in the underwater communication device of the present invention. For instance, in some embodiments, the waterproof housing 21 is mounted on the housing 10 to retain the microphone unit 20 within the chamber 11 of the housing 10; in other embodiments, the waterproof housing 21 is bonded to the housing 10 to retain the microphone unit 20 within the chamber 11 of the housing 10.

When the diver emits sound waves when speaking, these sound waves strike the waterproof bag 23 of the microphone unit 20, causing it to vibrate at the corresponding frequency. The vibrations of the waterproof bag 23 then agitate the air within the transduction space 24 of the microphone unit 20, inducing it to vibrate at the same frequency. It is understandable that the vibration frequency of the air within the transduction space 24 of the microphone unit 20 corresponds to the frequency of the sound waves remitted by the diver. The microphone 22 collects these sound waves by capturing the vibrations of the air within the transduction space 24 of the microphone unit 20. Furthermore, the microphone 22 converts these vibrations into electrical signals, which are subsequently transmitted by the underwater communication device to the outside world to facilitate communication between the diver and others.

It is understandable that, in embodiments where the microphone unit 20 is not equipped with the waterproof bag 23, when the diver emits sound waves when speaking, the microphone 22 can directly capture these sound waves and convert them into electrical signals, which are subsequently transmitted by the underwater communication device to the outside world to facilitate communication between the diver and others.

Further referring to attached Figures 7A to 15, the microphone unit 20 further comprises a bag holder 25, and the bag holder 25 has a bag holder space 251, a bag holder opening 252 and a set of bag holder passage 253, wherein the bag holder opening 252 is connected to the bag holder space 251 at the mounting end of the bag holder 25; the set of bag holder passage 253 is respectively connected with the the bag holder space 251 at free end of the bag holder 25 and the set of bag holder passage 253 is distributed in annular shape. The bag holder 25 is installed on the waterproof housing 21 in a manner that allows a part of the waterproof housing 21 to extend into the bag holder space 251 through the bag holder opening 252. The waterproof bag 23 is then fitted around the exterior of the bag holder 25, with the bag holder 25 maintaining the shape of the waterproof bag 23 to form the transduction space 24 between the waterproof bag 23 and the waterproof housing 21. In other words, the bag holder 25 serves as a skeleton supporting the waterproof bag 23, thereby forming the transduction space 24 between the waterproof bag 23 and the waterproof housing 21.

When the diver emits sound waves when speaking, these sound waves strike the waterproof bag 23 of the microphone unit 20, causing it to deform towards the bag holder space 251 of the bag holder 25 through the bag holder passage 253 of the bag holder 25 at the corresponding frequency. This deformation, in turn, vibrates the air within the transduction space 24 of the microphone unit 20 at the same frequency.

It is worth noting that the method of installing the bag holder 25 and the waterproof housing 21 is not restricted in the underwater communication device of this invention. For instance, in some embodiments, cooperating threaded structures may be provided on the mounting end of the bag holder 25 and the waterproof housing 21 to screw the bag holder 25 on the waterproof housing 21. The connection between the bag holder 25 and the waterproof housing 21 is waterproofed to prevent water entering the chamber 11 of the housing 10 from penetrating into the transduction space 24 of the microphone unit 20 through the bag holder 25 and the waterproof housing 21. In other embodiments, after a part of the waterproof housing 21 extends into the bag holder space 251 through the bag holder opening 252 of the bag holder 25, ultrasonic welding is used to weld the bag holder 25 and the waterproof housing 21 for their reliable attachment, also preventing water entering the chamber 11 of the housing 10 from penetrating into the transduction space 24 of the microphone unit 20 through the bag holder 25 and the waterproof housing 21.

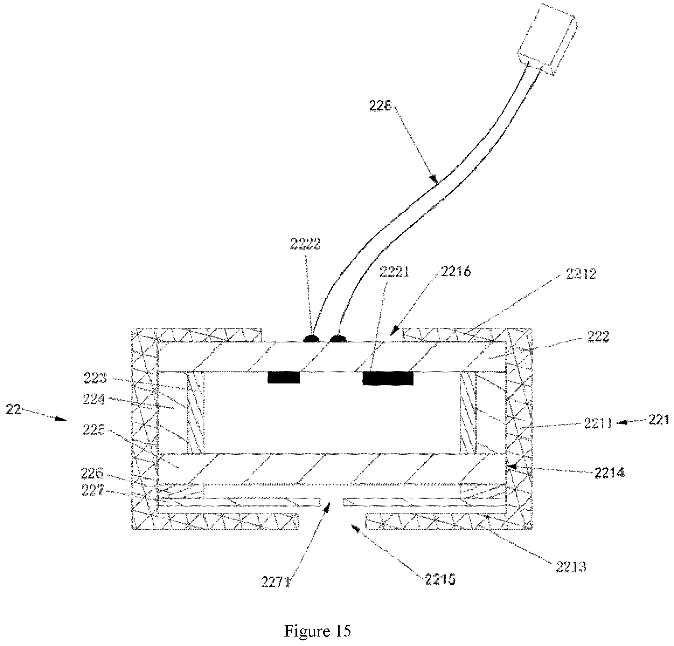

Now Figure 15 is mentioned. The the microphone 22 of the microphone unit 20 further comprises a housing 221, a circuit board 222, a conductive ring 223, a first insulating ring 224, an electret plate 225, a second insulating ring 226, and a diaphragm 227.

The housing 221 includes a housing body 2211, a plate cover 2212, a membrane cover 2213, an accommodating space 2214 and a sound inlet hole 2215. Wherein, the housing body 2212 is ring-shaped, with the plate cover 2212 and the membrane cover 2213 located at opposite ends of each other, forming the accommodating space 2214 between the housing body 2211, the plate cover 2212, and the membrane cover 2213. The sound inlet hole 2215 is formed in the membrane cover 2213 and connects the accommodating space 2214 to the external environment. The housing 221 can be made by spinning process.

The circuit board 222 is accommodated in the accommodation space 2214 of the housing 221 by adhering to the board cover 2212 of the housing 221. The circuit board 222 may be equipped with at least one electronic component 2221, for example, the electronic component 2221 may be, but is not limited to, Metal Oxide Semiconductor Field Effect Transistor (MOSFET). In addition, the housing 221 further has a clearance hole 2216 formed on the board cover 2212 and connected to the accommodation space 2214 and the external environment. Wherein, the circuit board 222 may be provided with a pair of solder pads 2222 for soldering a wire 228, and the solder pads 2222 of the circuit board 222 correspond to the clearance hole 2216 of the housing 221, and the wire 228 can extend outward through the clearance hole 2216 of the housing 221. Preferably, the electronic component 2221 and the solder pad 2222 can be located on opposite sides of the circuit board 222. Optionally, the electronic component 2221 and the solder pad 2222 can be located on the same side of the circuit board 222, and at this time, the electronic component 2221 can correspond to the clearance space 2216 of the housing 221.

The first insulating ring 224 is fitted onto the outer side of the conductive ring 223, and the first insulating ring 224 and the conductive ring 223 are accommodated in the accommodation space 2214 of the housing 221 in such a way that the outer wall of the first insulating ring 224 is adhered to the inner wall of the housing 221, and one end of the conductive ring 223 and one end of the first insulating ring 224 are pressed against the circuit board 222. The electronic component 2221 mounted on the circuit board 222 may correspond to the interior of the conductive ring 223.

The electret board 225 is accommodated in the accommodation space 2214 of the housing 221, and the other end of the conductive ring 223 and the other end of the first insulating ring 224 are pressed against the electret board 225.

The second insulating ring 226 is set between the electret board 225 and the diaphragm 227, and both the second insulating ring 226 and the diaphragm 227 are accommodated in the accommodation space 2214 of the housing 221. Wherein, the diaphragm 227 and the diaphragm cover 2213 of the housing 221 are set face to face with a gap between them, and the sound inlet hole 2215 of the housing 221 corresponds to the diaphragm 227. At this time, the diaphragm 227 and the electret board 225 form a capacitor.

The diaphragm cover 2213 of the housing 221 of the microphone 22 faces the transduction space 24 of the microphone unit 20. Wherein, when the air inside the transduction space 24 vibrates, sound waves can enter the accommodation space 2214 through the sound inlet hole 2215 of the housing 221, causing the diaphragm 227 to vibrate synchronously. The capacitance between the diaphragm 227 and the electret board 225 changes due to the vibration. The circuit board 222 converts the change in capacitance into the change in current, so that the microphone 222 can convert sound wave signals into electrical signals.

Further referring to the attached Figure 15, the diaphragm 227 has a through hole 2271, wherein the through hole 2271 corresponds to the sound inlet hole 2215 of the housing 221, and the diameter of the through hole 2271 of the diaphragm 227 is smaller than the diameter of the sound inlet hole 2215 of the housing 221. Therefore, when the air vibrates in the transduction space 24, causing sound waves to enter the accommodation space 2214 through the sound inlet hole 2215 of the housing 221, the vibration amplitude of the diaphragm 227 can be reduced, thereby reducing the sensitivity of the microphone 22. In this way, when the microphone 22 is held in the chamber 11 of the housing 10, the overall sound effect of the underwater communication device can be improved.

Further referring to attached Figures 6A to 15, the microphone unit 20 further comprises a magnetic switch 26 which is operable to be installed on the waterproof housing 21, and the microphone 22 is controllable to be connected to the magnetic switch 26. The housing 10 has a switch passage 17 which is connected to the chamber 11. Among them, the magnetic switch 26 of the microphone unit 20 extends from the chamber 11 of the housing 10 to the outside of the housing 10 through the switch passage 17 of the housing 10, so as to expose a part of the magnetic switch 26 to the outer wall of the housing 10, thus making it easier for divers wearing the underwater communication device to operate..

Further referring to attached Figures 6A to 15, the housing 10 further has a wire passage 18 which is connected to the chamber 11. Among them, one wire for connecting to the microphone 22 of the microphone unit 20 can extend from the chamber 11 of the housing 10 to the outside of the housing 10 through the wire passage 18 of the housing 10.

Further referring to attached Figures 6A to 15, the inner wall 16 of the housing 10 of the underwater communication device of the present invention is provided with a noise reduction part 15 which is the protrusion 151 from the inner wall 16 to form a rough inner wall on the inner wall 16 of the housing 10. Therefore, when a diver emits sound waves when speaking, the first part of the sound waves directly reach the microphone unit 20 and are collected by the microphone unit 20; The second part of the sound wave is reflected by the protrusion 151 of the housing 10 in a direction away from the microphone unit 20 after reaching the inner wall 16 of the housing 10 on the left side of attached Figure 11; The third part of the sound wave is reflected by the protrusion 151 towards the part of the inner wall 16 of the housing 10 on the right side of attached Figure 11 after reaching the part of the inner wall 16 of the housing 10 on the left side of attached Figure 11, and is reflected by the protrusion 151 towards the direction away from the microphone unit 20 after reaching the part of the inner wall 16 of the housing 10 located on the right side of attached Figure 11; The fourth part of the sound wave is reflected by the protrusion 151 of the housing 10 towards the part of the inner wall 16 of the housing 10 on the right side of attached Figure 11 after reaching the part of the inner wall 16 of the housing 10 on the left side of attached Figure 11, and is reflected by the protrusion 151 of the housing 10 towards the the microphone unit 20 after reaching the part of the inner wall 16 of the housing 10 on the right side of attached Figure 11, thereby reaching the microphone unit 20 and being collected by the microphone unit 20; The fifth part of the sound wave is reflected by the protrusion 151 towards the microphone unit 20 after reaching the part of the inner wall 16 of the housing 10 on the right side of attached Figure 11, thereby reaching the microphone unit 20 and being collected by the microphone unit 20.

In other words, a series of mutually spaced protrusion 151 are set on the inner wall 16 of the housing 10 to form a rough inner wall on the inner wall 16 of the housing 10, so that when the diver speaks and emits sound waves, the second part of sound waves and the third part of sound waves are reflected away from the microphone unit 20 by the protrusion 151 of the housing 10 and cannot reach the microphone unit 20, to reduce the part of sound waves emitted by the diver that are reflected by the inner wall 16 of the housing 10 to the microphone unit 20, thereby reducing noise. Moreover, the fourth and fifth parts of the sound waves need to be reflected multiple times by the inner wall 16 of the housing 10 before reaching the microphone unit 20. In the process of being reflected multiple times by the inner wall 16 of the housing 10, the energy of the fourth part of the sound waves is greatly attenuated, thereby reducing the energy of the part of the sound waves emitted by the diver when speaking that is reflected by the inner wall 16 of the housing 10 to the microphone unit 20, thereby reducing noise.

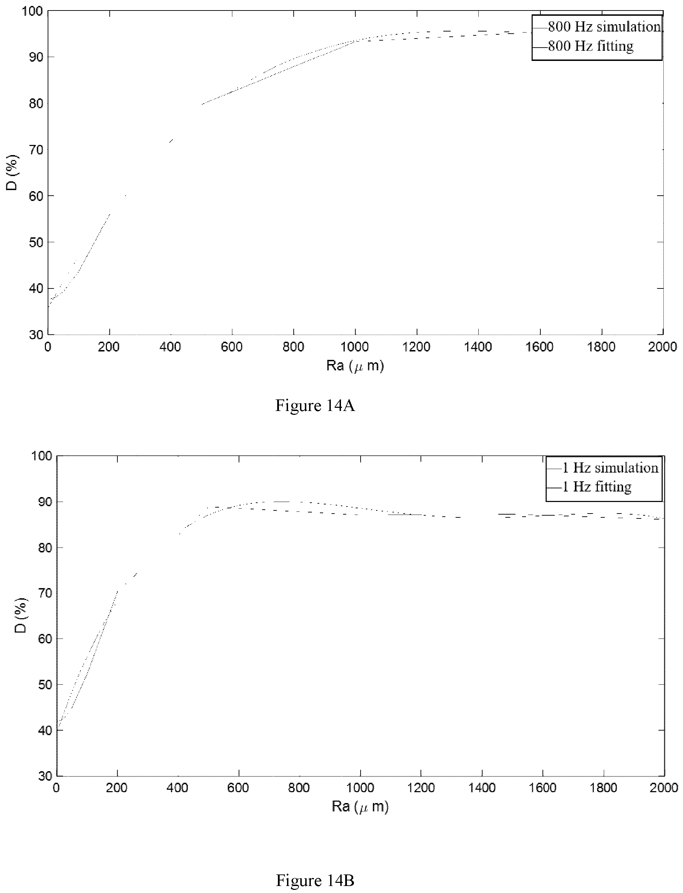

Now turning to attached Figure 14A, it describes the relationship between the collected sound clarity of the microphone unit 20 and the roughness of the inner wall 16 of the housing 10 when the frequency of the sound wave is 800Hz, wherein Curve A is a simulation curve where the collected sound clarity of the microphone unit 20 increases with the increase of the roughness of the inner wall 16 of the housing 10 when the frequency of the sound wave emitted by the diver is 800Hz, and Curve A' is a fitting curve where the collected sound clarity of the microphone unit 20 increases with the increase of the roughness of the inner wall 16 of the housing 10 when the frequency of the sound wave emitted by the diver is 800Hz. Wherein, the specific relationship between the frequency f of the sound wave, the collected sound clarity D of the microphone unit 20 and the roughness Ra of the inner wall 16 of the housing 10 is as follows:

$$D = 1.6251 \times 10^{-8} \times Ra^3 - 7.6693 \times 10^{-5} \times Ra^2 + 0.0081 \times Ra + 35.7717.$$

Further referring to attached Figure 14B, it describes the relationship between the collected sound clarity of the microphone unit 20 and the roughness of the inner wall 16 of the housing 10 when the frequency of the sound wave is 1,000Hz, wherein Curve B is a simulation curve where the collected sound clarity of the microphone unit 20 increases with the increase of the roughness of the inner wall 16 of the housing 10 when the frequency of the sound wave emitted by the diver is 1,000Hz, and Curve B' is a fitting curve where the collected sound clarity of the microphone unit 20 increases with the increase of the roughness of the inner wall 16 of the housing 10 when the frequency of the sound wave emitted by the diver is 1,000Hz. Wherein, the specific relationship between the frequency f of the sound wave, the collected sound clarity D of the microphone unit 20 and the roughness Ra of the inner wall 16 of the housing 10 is as follows:

$$D = - 2.5169 \times 10^{-11} \times Ra^4 + 1.3243 \times 10^{-7} \times Ra^3 - 2.4677 \times 10^{-4} \times Ra^2 + 0.1885 \times Ra + 39.5358.$$

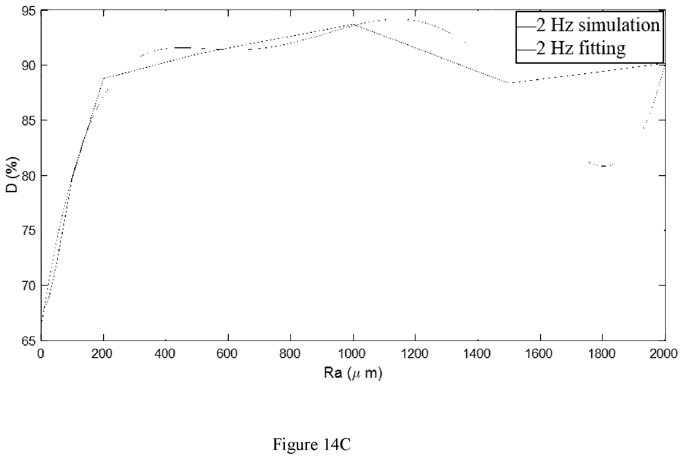

Further referring to attached Figure 14C, it describes the relationship between the collected sound clarity of the microphone unit 20 and the roughness of the inner wall 16 of the housing 10 when the frequency of the sound wave is 2,000Hz, wherein Curve C is a simulation curve where the collected sound clarity of the microphone unit 20 increases with the increase of the roughness of the inner wall 16 of the housing 10 when the frequency of the sound wave emitted by the diver is 2,000Hz, and Curve C' is a fitting curve where the collected sound clarity of the microphone unit 20 increases with the increase of the roughness of the inner wall 16 of the housing 10 when the frequency of the sound wave emitted by the diver is 2,000Hz. Wherein, the specific relationship between the frequency f of the sound wave, the collected sound clarity D of the microphone unit 20 and the roughness Ra of the inner wall 16 of the housing 10 is as follows:

$$D = 6.1951 \times 10^{-14} \times Ra^5 - 3.1095 \times 10^{-10} \times Ra^4 + 5.6706 \times 10^{-7} \times Ra^3 + 4.6915 \times 10^{-4} \times Ra^2 + 0.1785 \times Ra + 66.2069.$$

In addition, the clamping part 19 of the housing 10 can not only be used to assemble the holding unit 30 into the chamber 11 of the housing 10, but also reflect the sound waves emitted by the diver when speaking. This can attenuate the energy of the part of the sound wave emitted by the diver that reaches the inner wall 16 of the housing 10 and/or emit it in a direction away from the microphone unit 20, thereby reducing noise and improving the communication quality of the underwater communication device in the subsequent process.

Based on its another aspect, the present invention further provides a communication method of the underwater communication device, wherein the communication method comprises the following steps:

(A) The housing 10 of the underwater communication device is allowed to be held in front of the diver's mouth; and
(B) When the diver emits sound waves, a part of the sound wave is allowed to directly reach the microphone unit 20 of the chamber 11 in the housing 10 of the underwater communication device; another part of the sound wave is allowed to reach the microphone unit 20 after being reflected by the noise reduction part 15 of the housing 10, and another part of the sound wave is allowed to move away from the microphone unit 20 after being reflected by the noise reduction part 15 of the housing 10, thus achieving noise reduction and improving the communication quality of the underwater communication device.

It is worth mentioning that the way in which the housing 10 is allowed to be held in front of the diver's mouth is not limited in the communication method of the present invention in Step (A). For example, in the samples shown in attachd Figures 1A to 3B, the communication method allows the holding unit 30 to hold the housing 10 in front of the mouth by restraining the head of the diver. In the samples shown in attachd Figures 6A to 15, the communication method allows the divers to hold the housing 10 in front of their mouth by biting it with their teeth.

In the Step (B), the communication method can be used to reduce noise by allowing the noise reduction part 15 of the housing 10 to reflect a part of the sound wave away from the microphone unit 20, thereby reducing the part of sound wave emitted by divers that is reflected by the inner wall 16 of the housing 10 towards the microphone unit 20. Additionally, the communication method attenuates the energy of the sound wave emitted by the diver by allowing the noise reduction part 15 of the housing 10 to reflect a part of the sound wave towards the microphone unit 20, thereby reducing noise by attenuating the energy of sound wave emitted by divers when speaking that is reflected by the inner wall 16 of the housing 10 towards the microphone unit 20. Therefore, when the diver speaks and emits sound waves, the microphone unit 20 can collect purer sound waves to improve the communication quality of the underwater communication device.

For instance, in specific samples shown in attached Figures 3A and 3B, when the diver speaks and emits sound waves, the sound waves wl directly reach the microphone unit 20 and are collected by the microphone unit 20; Sound wave w2 is reflected by the protrusion 151 in a direction away from the microphone unit 20 after reaching the part of the inner wall 16 of the housing 10 on the left side of attached Figure 3B. The sound wave is reflected by the noise reduction part 15 towards the part of the inner wall 16 of the housing 10 on the right side of attached Figure 3B after reaching the part of the inner wall 16 of the housing 10 on the left side of attached Figure 3B, and is reflected by the noise reduction part 15 towards the direction away from the microphone unit 20 after reaching the part of the inner wall 16 of the housing 10 located on the right side of attached Figure 3B; The sound wave w4 is reflected by the noise reduction part 15 towards the part of the inner wall 16 of the housing 10 on the right side of attached Figure 3B after reaching the part of the inner wall 16 of the housing 10 on the left side of attached Figure 3B, and is reflected by the noise reduction part 15 towards the direction away from the microphone unit 20 after reaching the part of the inner wall 16 of the housing 10 located on the right side of attached Figure 3B, thereby reaching the microphone unit 20 and being collected by the microphone unit 20; The sound wave w5 is reflected by the noise reduction part 15 towards the microphone unit 20 after reaching the part of the inner wall 16 of the housing 10 on the right side of attached Figure 3B, thereby reaching the microphone unit 20 and being collected by the microphone unit 20. In other words, a series of mutually spaced noise reduction part 15 are set on the inner wall 16 of the housing 10, so that when the diver speaks and emits sound waves, sound waves w2 and w3 are reflected away from the microphone unit 20 by the noise reduction part 15 of the housing 10 and cannot reach the microphone unit 20, to reduce the part of sound waves emitted by the diver that are reflected by the inner wall 16 of the housing 10 to the microphone unit 20, thereby reducing noise. Moreover, the sound waves w4 and w5 need to be reflected multiple times by the inner wall 16 of the housing 10 before reaching the microphone unit 20. In the process of being reflected multiple times by the inner wall 16 of the housing 10, the energy of the sound waves w4 and w5 is greatly attenuated, thereby reducing the energy of the part of the sound waves emitted by the diver when speaking that is reflected by the inner wall 16 of the housing 10 to the microphone unit 20, thereby reducing noise.

Based on its another aspect, the present invention further provides a manufacturing method of the underwater communication device, wherein the manufacturing method comprises the following steps:

(a) Form the noise reduction part 15 on the inner wall 16 of the housing 10 for defining the chamber 11;

(b) Install the microphone unit 20 into the chamber 11 of the housing 10 from the aperture 101 for defining the front-facing side 14 of the housing 10; and

(c) Install the holding unit 30 on the housing 10 to produce the underwater communication device.

In some embodiments of the manufacturing method of the present invention, in the Step (a), the method of setting the noise reduction part 15 on the inner wall 16 of the housing 10 may be to roughen the inner wall 16 of the housing 10. For example, in some specific examples, the manufacturing method may be to roughen the inner wall 16 of the housing 10 by rolling the inner wall 16 of the housing 10 with a roller column with spikes. In some further specific examples, the manufacturing method may be to roughen the inner wall 16 by rubbing the inner wall 16 of the housing 10 with abrasive papers. In further another specific examples, the manufacturing method may be to roughen the inner wall 16 by corroding the inner wall 16 of the housing 10. In other specific examples, the manufacturing method may be to roughen the inner wall 16 by laser engraving.

In some embodiments of the manufacturing method of the present invention, in the Step (a), it is allowed to set the noise reduction part 15 on the inner wall 16 of the housing 10 while the housing 10 is being formed. For example, during injection molding of the housing 10, at least a part of the inner wall 16 of the housing 10 is allowed to form mutually spaced protrusions 151 or grooves 152, so as to form the noise reduction part 15 from these protrusions 151 or grooves 152.

Specifically, the Step (a) may further include the following steps:

(a.1) Form a molding space between an inner mold and an outer mold in a mold, wherein the surface of the inner mold for defining the molding space is a rough surface;

(a.2) Allow the molding material to solidify and form after injecting molding materials into the molding space of the mold; and (a.3) perform a parting operation on the mold to obtain the housing 10, wherein the inner wall 16 of the housing 10 is a rough inner wall to form the noise reduction part 15 on the inner wall 16 of the housing 10.

Preferably, in the Step (a.2), the molding material injected into the molding space of the mold may be silicone materials to allow the front-facing side 14 of the housing 10 to be deformable, so that when the diver wears the underwater communication device, the shape of the front-facing side 14 of the housing 10 can be automatically adjusted slightly based on the diver's facial arc to allow the diver's face to close the aperture 13 of the housing 10. In this way, when the diver wears the underwater communication device for diving, water is prevented from entering the chamber 10 of the housing 10 between the housing 10 and the diver's face.

In the Step (a), the housing 10 is allowed to form the clamping part 19 during injection molding of the housing 10. As the housing 10 is deformable, the size of the aperture 13 of the housing 10 can be increased. Therefore, in the Step (b), the assembly plate 311 of the assembly part 31 of the holding unit 30 can be moved to the chamber 11 of the housing 10 through the aperture 13 of the housing 10 and subsequently clamped in the clamping groove 193 formed between the first clamping protrusion 191 and the second clamping protrusion 192 of the clamping part 19 for installation. The holding unit 30 is mounted on the housing 10.

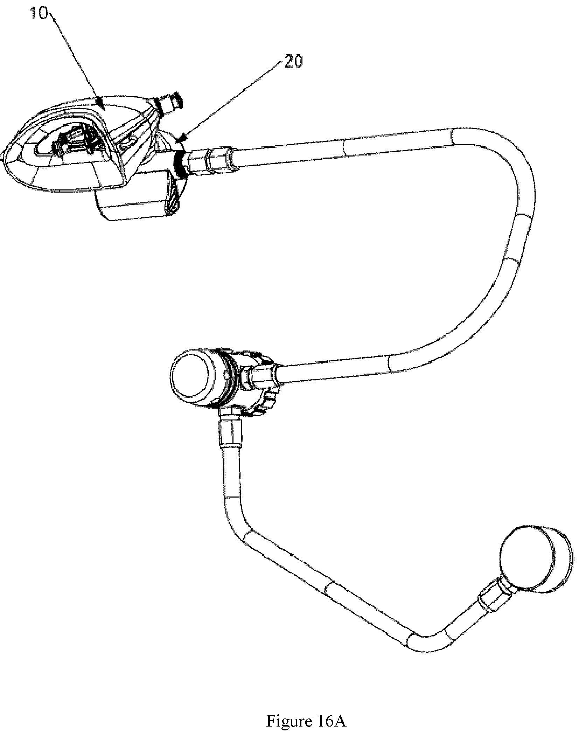

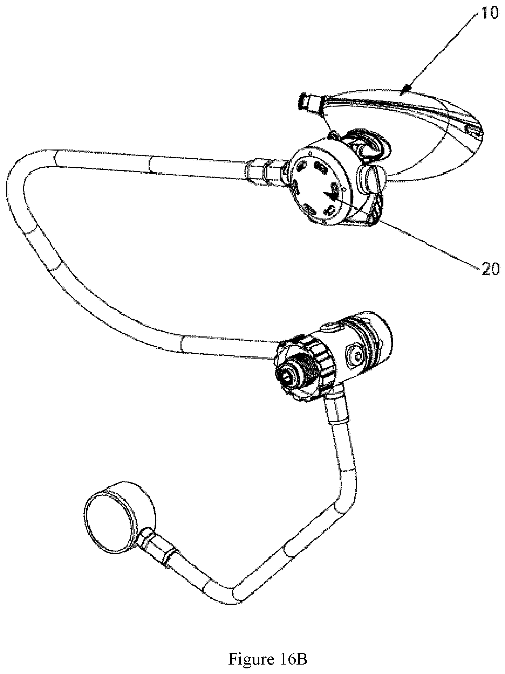

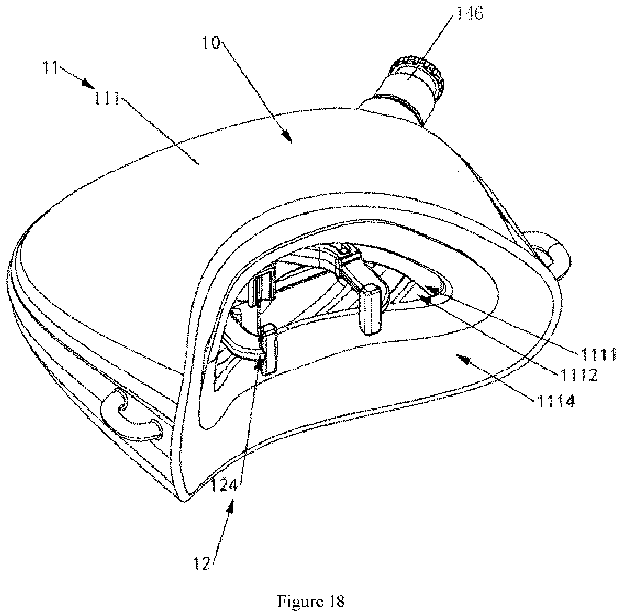

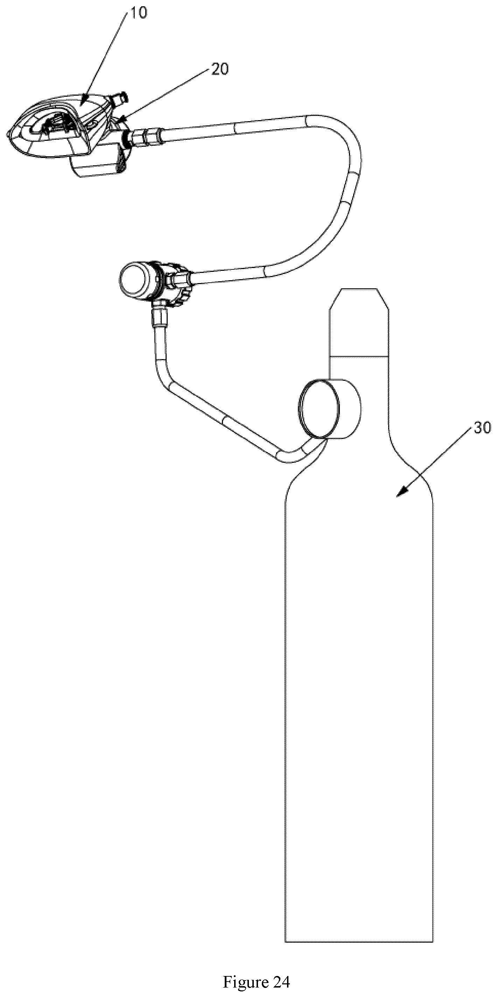

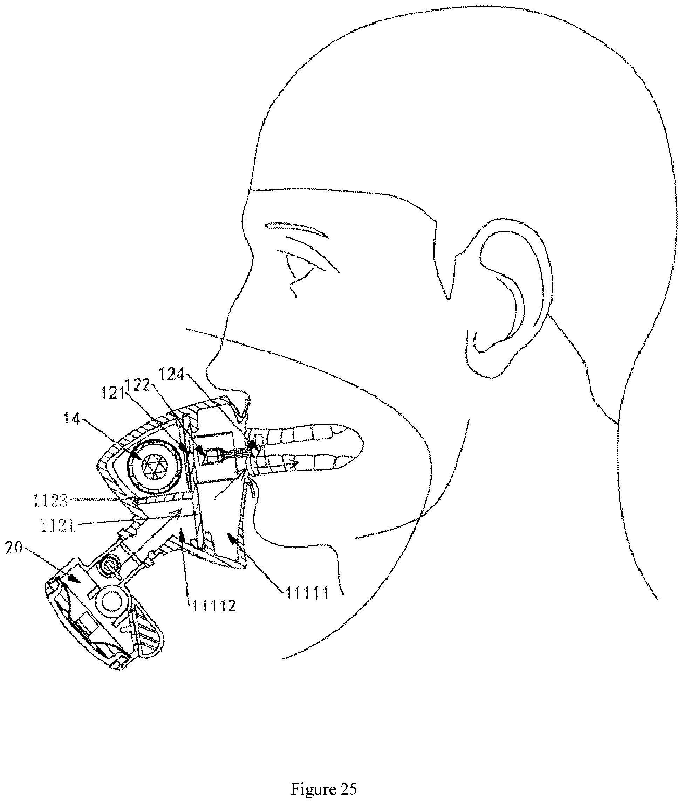

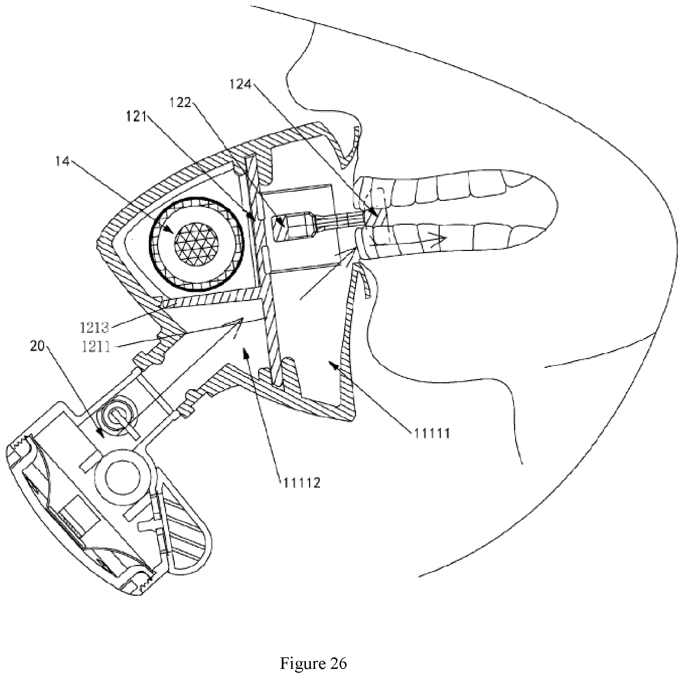

Referring to Figures 16A to 26 attached to the Specification of the present invention, an anti-full-throat diving device based on a preferred embodiment of the present invention will be disclosed and described in the following description, wherein the anti-full-throat diving device comprises a diving mask 10 and primary and secondary heads 20.

Specifically, the diving mask 10 comprises a mask body 11, and the mask body 11 comprises a mask housing 111 which has a breathing chamber 1111, a breathing opening 1112, an air inlet 1113, and a front-facing side 1114. The breathing opening 1112 and the air inlet 1113 are respectively connected to the breathing chamber 1111, and the breathing opening 1112 defines the front-facing side 1114.

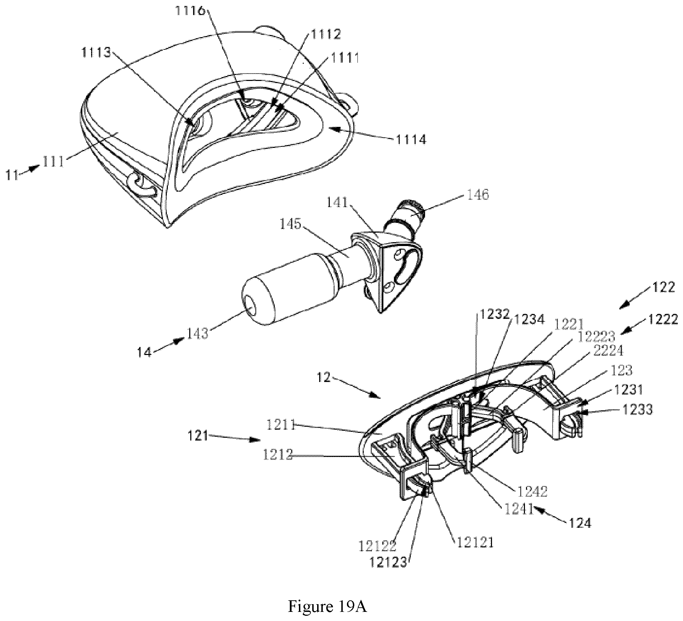

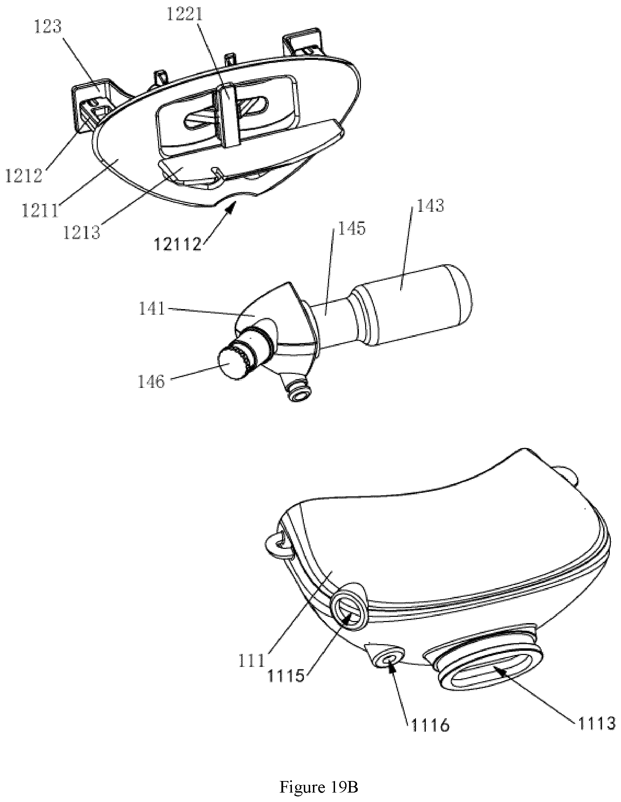

For example, referring to attached Figures 19A and 19B, the breathing opening 1112 of the mask housing 111 is located on the front side, as follows: On one hand, the breathing opening 1112 is connected to the breathing chamber 1111 on the front side of the mask housing 111. On the other hand, the front-facing side 1114 defined by the breathing opening 1112 is located on the front side of the mask housing 111. Wherein, when a diver wears the anti-full-throat diving device, the diver's face is fitting to the front-facing side 1114 of the mask housing 111 to close the breathing opening 1112 of the mask housing 111 by the diver's face, and the diver's mouth corresponds to the breathing opening 1112 of the mask housing 111. The air inlet 1113 of the mask housing 111 is located at the rear side, so that the air inlet 1113 is connected to the breathing chamber 1111 at the rear side of the mask housing 111. The secondary head 20 is installed on the air inlet 1113 of the mask housing 111 of the mask body 11 of the diving cover 10. The gas stored in a compressed gas cylinder 30 can be replenished to the breathing chamber 1111 of the mask housing 111 through the secondary head 20 and the air inlet 1113 of the mask housing 111, allowing divers to breathe the gas inside the breathing chamber 1111 through the breathing opening 1112 of the mask housing 111.

When the diver wears the anti-full-throat diving device, in order to make the front-facing side 1114 of the mask housing 111 fit the diver's face, the breathing opening 1112 of the mask housing 111 is closed by the diver's face. On one hand, the front-facing side 1114 of the mask housing 111 is designed to adapt to the curvature of the face; on the other hand, the front-facing side 1114 of the mask housing 111 is designed to be deformable, so that when the diver wears the anti-full-throat diving device, the shape of the front-facing side 1114 of the mask housing 111 can be automatically adjusted based on the curvature of the diver's face. After the anti-full-throat diving device is worn by the diver, water is prevented from entering the breathing chamber 1111 of the mask housing 111 between the mask housing 111 and the diver's face.

Preferably, the mask housing 111 is made of flexible materials as a whole, such as silicone materials, which can be used to make the mask housing 111. In this way, the front-facing side 1114 of the mask housing 111 can be deformed. So that, when the diver wears the anti-full-throat diving device, the shape of the front-facing side 1114 of the diving cover 10 can be automatically adjusted based on the curvature of the diver's face. Therefore, after the diver wears the anti-full-throat diving device, water is prevented from entering the breathing chamber 1111 of the mask housing 111 between the mask housing 111 and the diver's face.

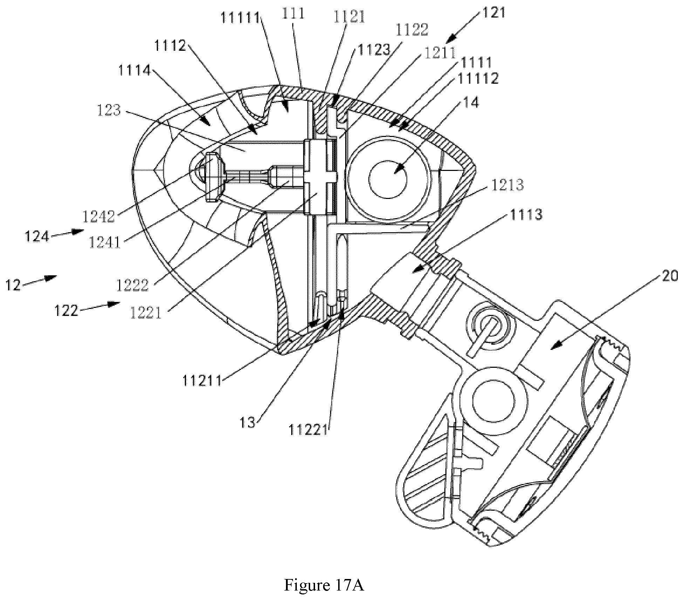

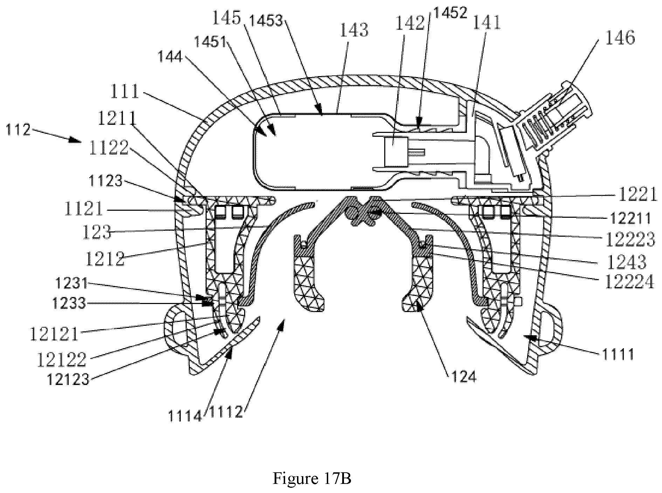

Further referring to attached Figures 17A to 26, the diving cover 10 comprises a mouthpiece part 12 set on the mask housing 111. The mouthpiece part 12 allows the diver to keep the mask housing 111 of the mask body 11 in front of the mouth by biting it with teeth. When gas enters the breathing chamber 1111 of the mask housing 111 through the secondary head 20, the diver's teeth can block the gas, so as to prevent it from directly entering the diver's oral cavity, thereby avoiding the exhaled breath entering the breathing chamber 1111 of the mask housing 111 through the secondary head 20 to directly impact the diver's throat. Moreover, the mouthpiece part 12 allows the diver to have the gap formed between the upper and lower teeth after closing the lips. The lips of the diver can block gas to prevent gas from entering the mask body 11 directly into the diver's oral cavity through the secondary head 20, thereby avoiding gas entering the mask body 11 through the secondary head 20 from impacting the diver's throat.

Referring to attached Figures 19A-20B, as well as Figures 22 and 23, the mouthpiece part 12 comprises a holding component 121, a locking element 122, two elastic elements 123, and two mouthpieces 124.

Specifically, the holding component 121 comprises a holding element 1211, and two holding arms 1212 extending outward from opposite sides of the holding element 1211. The holding element 1211 is set on the mask housing 111 of the mask body 11, and is located in the breathing chamber 1111 of the mask housing 111. The holding arms 1212 extend out of the mask housing 111 without passing through the breathing opening 1112 of the mask housing 111 to avoid affecting the comfort of wearing the anti-full-throat diving device. Preferably, the two holding arms 1212 of the holding component 121 are symmetrically arranged.

Preferably, in some embodiments, the holding arm 1212 extends outwardly from the holding element 1211. Alternatively, in other embodiments, the holding element 1211 and the holding arm 1212 are a separate structure, wherein one end of the holding arm 1212 is mounted to the holding element 1211 to make the holding arm 1212 extend outward from the holding element 1211.

The locking element 122 comprises a locking body 1221 and two locking arms 1222, with the two locking arms 1222 extending obliquely outward from opposite sides of the locking body 1221. Preferably, the two locking arms 1222 extend symmetrically and obliquely outward from opposite sides of the locking arms 1222, so that when viewed from above, the locking element 22 forms a "V" shape.

Two elastic elements 123 extend in a bent manner, and each of the two elastic elements 123 has an elastic outer end 1231 and an elastic inner end 1232 corresponding to the elastic outer end 1231. Wherein, the elastic outer ends 1231 of the two elastic elements 123 are respectively set at the free ends of the two holding arms 1212 of the holding component 121, and the elastic inner ends 1232 of the two elastic elements 123 are respectively set on opposite sides of the locking body 1221 of the locking element 122. When not under force, the two elastic elements 123 keep the locking body 1221 of the locking element 122 close to the holding element 1211 of the holding component 121.

Preferably, the elastic outer end 1231 of the elastic element 123 is detachably mounted on the free end of the holding arm 1212 of the holding component 121 to set the elastic outer end 1231 of the elastic element 123 at the free end of the holding arm 1212. The elastic inner end 1232 of the elastic element 123 is detachably mounted on the side of the locking body 1221 of the locking element 122 to set the elastic inner end 1232 of the elastic element 123 to the locking body 1221 of the locking element 122.

Specifically, the elastic element 123 has a first mounting passage 1233 formed at the elastic outer end 1231 of the elastic element 123, wherein the free end of the holding arm 1212 of the holding component 121 is set to be able to penetrate the first mounting passage 1233 of the elastic element 123, so as to set the elastic outer end 1231 of the elastic element 123 at the free end of the holding arm 1212 of the holding component 121.

Preferably, the free end of the holding arm 1212 of the holding component 121 has a first holding arm 12121 and a second holding arm 12122, as well as an extension groove 12123 formed between the first holding arm 12121 and the second holding arm 12122, so that the first holding arm 12121 and the second holding arm 12122 have elasticity and can both deform towards the extension groove 12123, making it easy to insert the free end of the holding arm 1212 into the first mounting passage 1233 of the elastic element 123 and reliably mount the elastic outer end 1231 of the elastic element 123 on the free end of holding arm 1212.

The elastic inner end 1232 of the two elastic elements 123 is detachably mounted on the side of the locking body 1221 of the locking element 122 to set the elastic inner end 1232 of the elastic element 123 to the locking body 1221 of the locking element 122.

Preferably, there are certain positioning grooves 12211 respectively at the opposite sides of the locking body 1221 of the locking element 122 for positioning the elastic inner ends 1232 of the two elastic elements 123, thereby improving the reliability of the connection relationship between the elastic inner ends 1232 of the elastic elements 123 and the locking body 1221 of the locking element 122.

Preferably, the curvature of the positioning groove 12211 of the locking body 1221 is consistent with the curvature of the elastic inner end 1232 of the elastic element 123, so as to allow the elastic inner end 1232 of the elastic element 123 to smoothly rotate in the positioning groove 12211 of the locking body 1221 when the locking body 1221 of the locking element 122 is displaced relative to the holding element 1211 of the holding component 121.

When pulling the locking element 122 outward to allow the locking element 122 to move away from the holding element 1211 of the holding component 121, in order to avoid the elastic inner end 1232 of the elastic element 123 from falling off the positioning groove 12211 of the locking body 1221 of the locking element 122, the elastic element 123 further has a second mounting passage 1234 formed at the elastic inner end 1232 of the elastic element 123. Wherein, after the locking arm 1222 of the locking element 122 passes through the second mounting passage 1234 of the elastic element 123, the elastic inner end 1232 of the elastic element 123 is positioned in the positioning groove 12211 of the locking body 1221. In this way, when the locking element 122 is pulled outward to move away from the holding element 1211 of the holding component 121, the locking arm 1222 of the locking element 122 blocks the elastic element 123 to prevent the elastic inner end 1232 of the elastic element 123 from falling off from the positioning groove 12211 of the locking body 1221.

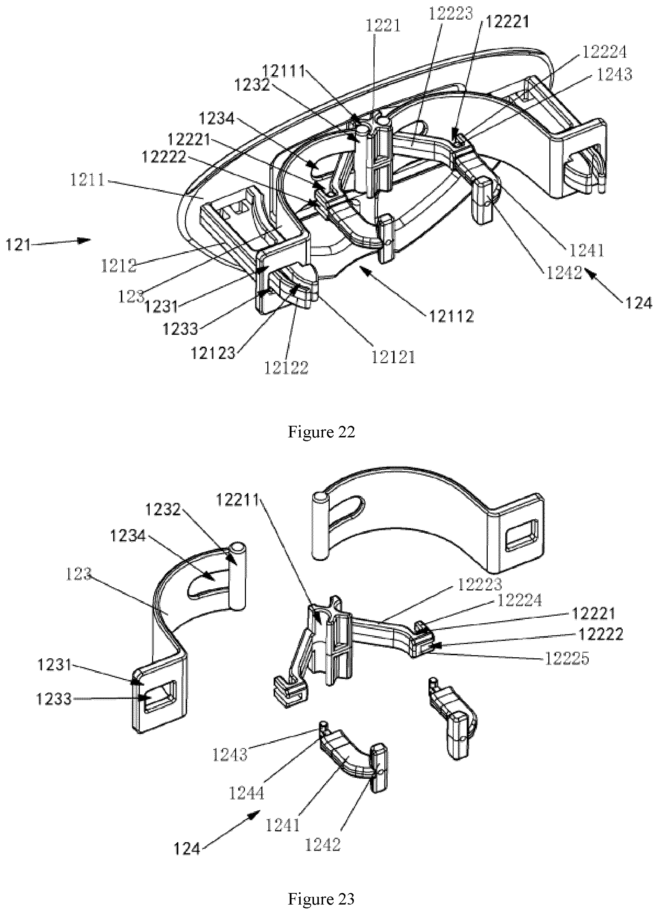

Referring to attached Figures 22 and 23, the two mouthpieces 124 are respectively detachably mounted on the two locking arms 1222 of the locking element 122, so that the mouthpieces 124 can be replaced to ensure the hygiene of the anti-full-throat diving device.

The process for divers to wear the anti-full-throat diving device of the present invention, as illustrated in attached Figures 16A to 26, is as follows: Firstly, keep the mask body 11 stationary and apply force to the mouthpiece 124 of the mouthpiece part 12, so as to pull the mouthpiece 124 out of the breathing opening 1111 of the mask housing 111 through the breathing opening 1112 of the mask housing 111. At this time, the locking element 122 and the two mouthpieces 124 move outward as a whole, causing the two elastic elements 123 to undergo elastic deformation. Therefore, the two elastic elements 123 make the locking element 122 and the two mouthpieces 124 have a tendency to move in the direction of the holding element 1211 near the holding component 121. Secondly, the diver bites the mouthpiece 124 with teeth. In the process of restoring the initial state of the two elastic elements 123, the two elastic elements 123 pull the mask body 11 towards the diver's face, so that the front-facing side 1114 of the mask housing 111 of the mask body 11 fits to the diver's face. The breathing opening 1112 of the mask housing 111 is closed by the diver's face to complete the wearing of the anti-full-throat diving device. At this point, the diver's lips can close to form the gap formed between the upper and lower teeth.

In the diving process, due to the fact that the diver always bites the mouthpiece 124 of the mouthpiece part 12 with teeth, and the upper and lower lips of the diver are allowed to contact by the mouthpiece 124, and the gap formed between the upper and lower teeth by the lips is closed. Therefore, when gas enters the breathing chamber 1111 of the mask housing 111 through the secondary head 20, the diver's lips and teeth can block the gas to prevent the gas entering the breathing chamber 1111 of the mask housing 111 through the secondary head 20 from directly entering the diver's oral cavity, thereby avoiding the exhaled breath entering the breathing chamber 1111 of the mask housing 111 through the secondary head 20 from directly impacting the diver's throat.

Moreover, when the diver wears the anti-full-throat diving device, at least a part of the two mouthpieces 124 are held in the diver's oral cavity. The mouthpiece 124 of the mouthpiece part 12 of the diving mask 10 of the present invention is designed to be detachable to ensure the hygiene of the anti-full-throat diving device. Remove the the used mouthpiece 124 and install the unused mouthpiece 124 (including the brand new mouthpiece 124 and the disinfected mouthpiece 124) to ensure that the mouthpiece 124 is unused before each wearing of the anti-full-throat diving device by the diver. Preferably, the mouthpiece 124 has elasticity, for example, the mouthpiece 124 can be made of silicone materials to give it elasticity, in order to improve the comfort of divers when biting the mouthpiece 124 with their teeth.

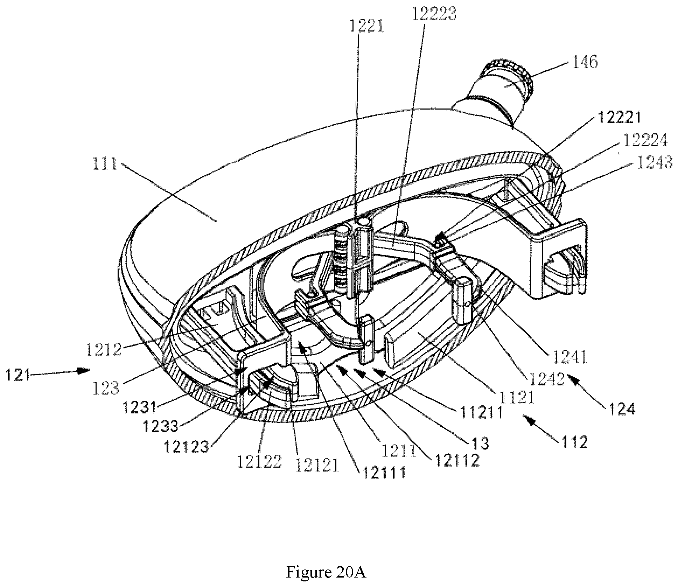

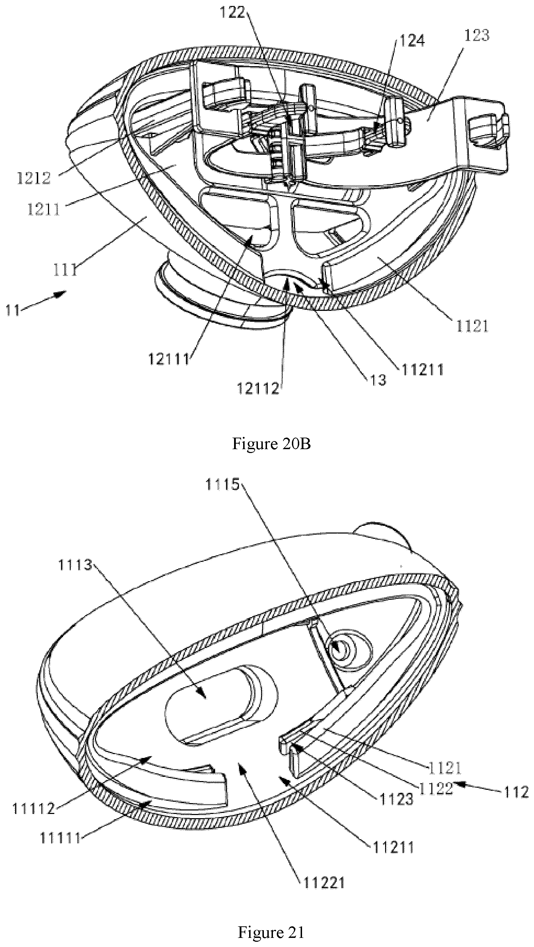

Further referring to attached Figures 20A, 20B, 22 and 23, the diagonal arm 1222 of the locking element 122 features a first direction retaining groove 12221 and a second direction retaining groove 12222, which are interconnected, with the extension directions of the first direction retaining groove 12221 and the second direction retaining groove 12222 being perpendicular to each other. The mouthpiece 124 comprises a mouthpiece body 1241, an anti-detachment protrusion 1242, a first direction retaining post 1243, and a second direction retaining post 1244. The anti-detachment protrusion 1242 is protrusively disposed at one end of the mouthpiece body 1241; the second direction retaining post 1244 extends integrally from the other end of the mouthpiece body 1241, and the first direction retaining post 1243 extends integrally from the second direction retaining post 1244, with the extension directions of the first direction retaining post 1243 and the second direction retaining post 1244 being perpendicular to each other. The first direction retaining post 1243 and the second direction retaining post 1244 of the mouthpiece 124 are respectively held in the first direction retaining groove 12221 and the second direction retaining groove 12222 of the locking arm 1222 to install the mouthpiece 124 on the locking arm 1222 of the locking element 122.

Specifically, the locking arm 1222 further comprises a diagonal arm body 12223 and two retaining arm bodies 12224. The diagonal arm body 12223 extends integrally from the sidewall of the mounting element 1221, and the two retaining arm bodies 12224 extend outwardly and backwardly from the free end of the diagonal arm body 12223 in a mutually spaced manner, forming one part of the first direction retaining groove 12221 between one retaining arm body 12224 and the diagonal arm body 12223, and another part of the first direction retaining groove 12221 between the other retaining arm body 12224 and the diagonal arm body 12223. Additionally, the second direction retaining groove 12222 is formed between the two retaining arm bodies 12224. Preferably, by allowing the two retaining arm bodies 12224 to extend outwardly and backwardly from the free end of the diagonal arm body 12223, the locking arm 1222 enables slight deformation of the two retaining arm bodies 12224 of the locking arm 1222 when under force during mounting the mouthpiece 124 to the locking arm 1222, facilitating such attachment of the mouthpiece 124 to the locking arm 1222 and ensuring the reliability of the mounting between the mouthpiece 124 and the locking arm 1222.

Optionally, in other embodiments of the anti-full-throat diving device of the present invention, two retaining arm bodies 12224 extend inward and backward from the free ends of the diagonal arm body 12223 in a mutually spaced manner, respectively, to form a part of the first direction retaining groove 12221 between the retaining arm body 12224 and the diagonal arm body 12223, and another part of the first direction retaining groove 12221 between the other retaining arm body 12224 and the diagonal arm body 12223, and to form the second direction retaining groove 12222 between the two retaining arm bodies 12224.

Optionally, in other embodiments of the anti-full-throat diving device of the present invention, two retaining arm bodies 12224 extend inward and backward from the free ends of the diagonal arm body 12223 in a mutually spaced manner, respectively, to form a part of the first direction retaining groove 12221 between the retaining arm body 12224 and the diagonal arm body 12223, and another part of the first direction retaining groove 12221 between the other retaining arm body 12224 and the diagonal arm body 12223, and to form the second direction retaining groove 12222 between the two retaining arm bodies 12224.

Optionally, in other embodiments of the anti-full-throat diving device of the present invention, two retaining arm bodies 12224 extend inward and backward from the free ends of the diagonal arm body 12223 in a mutually spaced manner, respectively, to form a part of the first direction retaining groove 12221 between the retaining arm body 12224 and the diagonal arm body 12223, and another part of the first direction retaining groove 12221 between the other retaining arm body 12224 and the diagonal arm body 12223, and to form the second direction retaining groove 12222 between the two retaining arm bodies 12224.

The process of installing the mouthpiece 124 on the locking element 122 is as follows: Firstly, the first direction retaining post 1243 of the mouthpiece 124 is mounted to the first direction retaining groove 12221 of the locking arm 1222, while allowing the second direction retaining post 1244 of the mouthpiece 124 to align with the second direction retaining groove 12222 of the locking arm 1222; Secondly, a torque is applied to the mouthpiece 124 by rotating it relative to the locking arm 1222 by driving the mouthpiece 124, causing the first direction retaining post 1243 of the mouthpiece 124 to rotate within the first direction retaining groove 12221 of the locking arm 1222 and the second direction retaining post 1244 of the mouthpiece 124 to enter the second direction retaining groove 12222 of the locking arm 1222. The mounting of the mouthpiece 124 is completed when the second direction retaining post 1244 of the mouthpiece 124 fully engages within the second direction retaining groove 12222 of the locking arm 1222. It can be understood that by driving the mouthpiece 124 in opposite directions to rotate relative to the locking arm 1222, the first direction retaining post 1243 and the second direction retaining post 1244 of the mouthpiece 124 can respectively detach from the first direction retaining groove 12221 and the second direction retaining groove 12222 of the locking arm 1222, thus disassembling the mouthpiece from the locking arm 1222.

It is worth mentioning that when the diver wears the anti-full-throat diving device, the mouthpiece 124 is only subject to tensile force in the direction perpendicular to the holding element 1211 of the holding component 121. Due to the blocking effect of the holding arm body 12224 of the locking arm 1222, the mouthpiece 124 is prevented from falling off from the locking arm 1222 of the locking component 122 when the diver uses the anti-full-throat diving device, ensuring the diving safety of the diver. In addition, when the diver uses the anti-full-throat diving device, the mouthpiece 124 is prevented from shaking relative to the locking arm 1222 of the locking element 122 to ensure the diving safety of the diver due to the limiting effect of the two retaining arm bodies 12224 of the locking arm 1222 on the second direction retaining post 1244 of the mouthpiece 124.

To further avoid the shaking of the mouthpiece 124 relative to the locking arm 1222 of the locking element 122, the locking arm 1222 has a first fitting surface 12225, which is the front end surface of the two retaining arm bodies 12224. The mouthpiece 124 has a second fitting surface 1245 which is the end surface of the mouthpiece body 1241 at the end where the second direction retaining post 1244 is provided. Wherein, when the mouthpiece 124 is mounted on the locking arm 1222, the second fitting surface 1245 of the mouthpiece 124 is fitting to the first fitting surface 12225 of the locking arm 1222. In this way, the mouthpiece 124 is allowed to be reliably installed on the locking arm 1222 of the locking element 122 through surface to surface fitting, to prevent the mouthpiece 124 from falling off the locking arm 1222 of the locking element 122 when the diver uses the anti-full-throat diving device, in order to ensure the diving safety of the diver. The second fitting surface 1245 of the mouthpiece 124 is allowed to fit to the first fitting surface 12225 of the locking arm 1222 of the locking element 122. When the mouthpiece 124 does not receive sufficient torque, the angle of the mouthpiece 124 relative to the locking arm 1222 of the locking element 122 remains unchanged to ensure the reliability of the anti-full-throat diving device.

Preferably, the length dimension of the second direction retaining post 1244 of the mouthpiece 124 is consistent with the width dimension of the retaining arm body 12224 of the locking arm 1222, so that when the mouthpiece 124 is mounted on the locking arm 1222, the second fitting surface 1245 of the mouthpiece 124 can tightly fit to the first fitting surface 12225 of the locking arm 1222.

It is worth mentioning that the shape of the first fitting surface 12225 of the locking arm 1222 and the shape of the second fitting surface 1245 of the mouthpiece 124 are not restricted in the anti-full-throat diving device of the present invention, as long as they are matched to ensure a tight fit. For example, in the specific example of the anti-full-throat diving device shown in attached Figures 16A to 26, the first fitting surface 12225 of the locking arm 1222 is flat, and correspondingly, the second fitting surface 1245 of the mouthpiece 124 is flat. Alternatively, in other embodiments of the anti-full-throat diving device of the present invention, the first fitting surface 12225 of the locking arm 1222 is concave, and correspondingly, the second fitting surface 1245 of the mouthpiece 124 is convex. In other embodiments of the anti-full-throat diving device of the present invention, the first fitting surface 12225 of the locking arm 1222 is convex, and correspondingly, the second fitting surface 1245 of the mouthpiece 124 is concave.

Preferably, referring to attached Figures 19A to 19B, Figures 25 and 26, the holding component 121 is held between the secondary head 20 and the mouthpiece 124.

In this way, the holding component 121 can disperse the gas that enters the breathing chamber 1111 of the mask housing 111 through the secondary head 20, to prevent the gas that enters the breathing chamber 1111 of the mask housing 111 through the secondary head 20 from directly entering the oral cavity of the diver.

In other words, when the diver wears the diving mask 10 in front of the mouth by biting the mouthpiece 124 with teeth, firstly, the holding component 121 disperses the gas entering the breathing chamber 1111 of the mask housing 111 through the secondary head 20 for the first time. Secondly, the diver's teeth disperse the gas entering the breathing chamber 1111 of the mask housing 111 for the second time. In this way, the gas entering the breathing chamber 1111 of the mask housing 111 through the secondary head 20 can be prevented from directly entering the diver's oral cavity and impacting the diver's throat, thereby improving the comfort and safety of the diver during diving.

To improve the effect of the holding component 121 in dispersing the gas entering the breathing chamber 1111 of the mask housing 111 through the secondary head 20, the holding element 1211 of the holding component 121 is designed in a plate shape, which separates the breathing chamber 1111 of the mask housing 111 into an outer chamber side 11111 and an inner chamber side 11112. The outer chamber side 11111 is connected to the breathing opening 1112, and the inner chamber side 11112 is connected to the air inlet 1113. The holding element 1211 has at least one gas passage 12111, and the gas passage 12111 connects the outer chamber side 11111 and the inner chamber side 11112. The air outlet of the secondary head 20 is set to face the holding element 1211 of the holding component 121 and deviate from the gas passage 12111 of the holding element 1211. In this way, the gas entering the breathing chamber 1111 of the mask housing 111 through the secondary head 20 will first rush towards the holding element 1211 of the holding component 121, and be dispersed by the holding element 1211 to fill the chamber inner side 11112 of the mask housing 111. The gas filling the chamber inner side 11112 of the mask housing 111 will then enter the outer side 11111 of the mask housing 111 through the gas passage 12111 of the holding element 1211. The gas entering on the chamber outer side 11111 of the mask housing 111 will be dispersed again by the diver's teeth when entering the diver's oral cavity. In the above process, the gas entering the breathing chamber 1111 of the mask housing 111 through the secondary head 20 can be prevented from directly entering the diver's oral cavity and impacting the diver's throat, thereby improving the comfort and safety of the diver during diving.

Preferably, referring to attached Figures 19B, 25 and 26, the holding component 121 further comprises an anti-impact plate 1213 which is set to extend backwards from the holding element 1211, and the plane of the holding element 1211 and the plane of the anti-impact plate 1213 have an internal angle (i.e., the angle between the plane of the holding element and the plane of the anti-impact plate is less than 180°). The outlet of the secondary head 20 installed obliquely is aligned with the connection position between the holding element 1211 and the anti-impact plate 1213, so that the holding element 1211 and the anti-impact plate 1213 of the holding component 121 can disperse the gas that enters the breathing chamber 1111 of the mask housing 111 through the secondary head 20. Preferably, the angle between the plane of the holding element 1211 and the plane of the anti-impact plate 1213 is 90°, that is, the plane of the holding element 1211 and the plane of the anti-impact plate 1213 are perpendicular to each other.

Further referring to attached Figures 20A to 21, the mask housing 11 further comprises an assembly component 112 set on the mask housing 111 and located in the breathing chamber 1111 of the mask housing 111. The holding component 121 is set on the mask housing 111 in such a way that the holding element 1211 is assembled on the assembly component 112 and the breathing chamber 1111 separating the mask housing 111 as the chamber outer side 11111 and the chamber inner side 11112.

Specifically, the assembly component 112 comprises at least one first clamping protrusion 1121 and at least one second clamping protrusion 1122, as well as at least one clamping groove 1123. The first clamping protrusion 1121 and the second clamping protrusion 1122 extend integrally on the inner wall of the mask housing 111 in a mutually spaced manner to form the clamping groove 1123 between the first clamping protrusion 1121 and the second clamping protrusion 1122. Wherein, the peripheral edge of the holding element 1211 is held in the clamping groove 1123 by the first clamping protrusion 1121 and the second clamping protrusion 1122, and thus the holding element 1211 is set in the mask housing 111. Preferably, both the first clamping protrusion 1121 and the second clamping protrusion 1122 are annular in shape.

When the diver wears the anti-full-throat diving device for diving activities, although the breathing opening 1112 of the mask housing 111 is closed by the diver's face, with changes in the diver's facial muscles (such as when speaking or making exaggerated expressions, the diver's facial muscles may change), water may enter the chamber outer side 11111 of the mask housing 111 from the breathing opening 1112 of the mask housing 111. To discharge the water entering the chamber outer side 11111 of the mask housing 111 to avoid affecting the diving effect, the diving mask 10 further has a liquid passage 13 connecting the chamber outer side 11111 of the mask housing 111 and the chamber inner side 11112. In this way, the water entering the chamber outer side 11111 of the mask housing 111 can be guided to the chamber inner side 11112 through the liquid passage 13, and then discharged through the drain outlet of the secondary head 20. It can be understood that the water outlet of the secondary head 20 is equipped with a one-way valve, which only allows water or gas that is guided to the chamber inner side 11112 of the mask housing 111 to be discharged outward, for example, it can be extracted through pump. In other words, the inner wall of the mask housing 111 defines the liquid passage 13 of the diving mask 10, so that the water entering the chamber outer side 11111 of the mask housing 111 can be sufficiently guided through the liquid passage 13 to the chamber inner side 11112 of the mask housing 111 in the event of water entering the breathing chamber 1111 of the mask housing 111, which is conducive to draining the water entering the breathing chamber 1111 of the mask housing 111.

Further referring to attached Figures 20A to 21, the liquid passage 13 of the diving cover 10 is formed between the mask housing 111 and the mouthpiece part 12. Specifically, the first clamping protrusion 1121 has a first fluid passage 11211 which is connected to the chamber outer side 11111 and the clamping groove 1123 for forming the water inlet of the liquid passage 13 of the diving mask 10. The second clamping protrusion 1122 has a second fluid passage 11221 connected to the chamber inner side 11112 and the clamping groove 1123 for forming the water outlet of the liquid passage 13 of the diving mask 10. When the holding element 1211 of the holding component 121 is clamped in the clamping groove 1123 between the first clamping protrusion 1121 and the second clamping protrusion 1122, the holding element 1211 will not block the first fluid passage 11211 of the first clamping protrusion 1121 and the second fluid passage 11221 of the second clamping protrusion 1122. In this way, the liquid passage 13 is formed between the mask housing 111 and the mouthpiece part 12. In this way, when water enters the breathing chamber 1111 of the mask housing 111, water can flow along the inner wall of the mask housing 111 through the liquid passage 13 from the chamber outer side 11111 and is guided to the chamber inner side 11112 and subsequently discharged through the drain outlet of the secondary head 20.

Preferably, the first fluid passage 11211 of the first clamping protrusion 1121 and the second fluid passage 11221 of the second clamping protrusion 1122 can be notch passages, as shown in Figure 21. Alternatively, the first fluid passage 11211 of the first clamping protrusion 1121 and the second fluid passage 11221 of the second clamping protrusion 1122 can be through passages.

Preferably, the position of the first fluid passage 11211 of the first clamping protrusion 1121 corresponds to the position of the second fluid passage 11221 of the second clamping protrusion 1122, which is conductive to the smooth flow of water entering the chamber outer side 11111 of the mask housing 111 through the liquid passage 13 of the diving mask 10 to the chamber inner side 11112 of the diving mask 111. This is crucial for improving the drainage efficiency of the diving mask 10.

Preferably, referring to attached Figures 19A to 20B, the holding element 1211 of the holding component 121 has a recess 12112, and the opposite sides of the recess 12112 of the holding element 1211 correspond to the first fluid passage 11211 of the first clamping protrusion 1121 and the second fluid passage 11221 of the second clamping protrusion 1122, respectively. Therefore, the liquid passage 13 of the diving mask 10 is formed between the mask housing 111 and the mouthpieace part 12. Alternatively, in other samples of the diving cover 10 of the present invention, the holding element 1211 may not be provided with the recess 12112. Instead, after the holding element 1211 is clamped in the clamping groove 1123 between the first clamping protrusion 1121 and the second clamping protrusion 1122, there is a gap between the periphery of the holding element 1211 and the inner wall of the mask housing 111, respectively connecting the first fluid passage 11211 of the first clamping protrusion 1121 and the second fluid passage 11221 of the second clamping protrusion 1122, thus forming the liquid passage 13 of diving mask 10 between the mask housing 111 and the mouthpiece part 12.

Referring to attached Figures 17A, 19A, 19B, 25 and 26, the diving mask 10 of the present invention further comprises a microphone unit 14 set on the mask housing 111 of the mask body 11 and located in the breathing chamber 1111 of the mask housing 111. Wherein, when the diver holds the mask body 11 in front of the mouth by the mouthpiece part 12, the mask body 11 holds the microphone unit 14 in front of the mouth. Therefore, when the diver emits sound waves when speaking, the sound waves emitted by the diver can be collected by the microphone unit 14, which will facilitate communication between the diver and others in the subsequent process throught the anti-full-throat diving device.

Further referring to attached Figures 17A, 19A, 19B, 25 to 26, the microphone unit 14 comprises a waterproof housing 141, a microphone 142 and a deformable waterproof bag 143, and the microphone unit 14 has a transduction space 144, wherein the microphone 142 is set in the waterproof housing 141, and the waterproof bag 143 is set in the waterproof housing 141 with the transduction space 144 formed between the waterproof bag 143 and the waterproof housing 141, and the microphone 142 faces the transduction space 144 of the microphone unit 14. The waterproof housing 141 is set on the mask housing 111 to keep the microphone unit 14 in the breathing chamber 1111 of the mask housing 111.

It is worth mentioning that the way in which the waterproof housing 141 is set on the mask housing 111 is not limited in the anti-full-throat diving device of the present invention. For example, in some embodiments, the waterproof housing 141 is installed on the mask housing 111 to keep the microphone unit 14 in the breathing chamber 1111 of the mask housing 111. In other embodiments, the waterproof housing 141 is glued to the mask housing 111 to keep the microphone unit 14 in the breathing chamber 1111 of the mask housing 111.

When the diver emits sound waves when speaking, the waterproof bag 143 can produce corresponding frequency vibrations after the sound waves reach the waterproof bag 143 of the microphone unit 14. The waterproof bag 143 then agitates the air in the transduction space 144 of the microphone unit 14 to produce corresponding frequency vibrations. It can be understood that the vibration frequency of the air in the transduction space 144 of the microphone unit 140 corresponds to the frequency of the sound waves emitted by the diver. The microphone 14 can collect the sound waves emitted by the diver by collecting the vibration of the air in the transduction space 144 of the microphone unit 14, and the microphone 142 can convert the vibration of the air in the transduction space 144 of the microphone unit 14 into electrical signals, which are subsequently transmitted by the anti-full-throat diving device to the outside world to facilitate communication between the diver and others.

It can be understood that in the embodiment where the microphone unit 14 is not equipped with the waterproof bag 143, when the diver emits sound waves when speaking, the microphone 142 can directly collect the sound waves and convert them into electrical signals, which are subsequently transmitted by the anti-full-throat diving device to the outside world to facilitate communication between the diver and others. In the embodiment where the microphone unit 14 is not equipped with the waterproof bag 143, the sound collecting surface of the microphone 142 can be attached with a waterproof sound transmitting film, in order to increase the waterproof performance of the microphone unit 14.

Further referring to attached Figures 17A, 19A, 19B, 25 to 26, the microphone unit 14 further comprises a bag holder 145, and the bag holder 145 has a bag holder space 1451, a bag holder opening 1452 and a set of bag holder passage 1453, wherein the bag holder opening 1452 is connected to the bag holder space 1451 at the mounting end of the bag holder 145; the set of bag holder passage 1453 is respectively connected with the the bag holder space 1451 at free end of the bag holder 145 and the set of bag holder passage 1453 is distributed in annular shape. The bag holder 145 is installed on the waterproof housing 141 in a manner that allows a part of the waterproof housing 141 to extend into the bag holder space 1451 through the bag holder opening 1452. The waterproof bag 143 is then fitted around the exterior of the bag holder 145, with the bag holder 145 maintaining the shape of the waterproof bag 143 to form the transduction space 144 between the waterproof bag 143 and the waterproof housing 141. In other words, the bag holder 145 serves as a skeleton supporting the waterproof bag 143, thereby forming the transduction space 144 between the waterproof bag 143 and the waterproof housing 141.

It can be understood that the waterproof bag 143 is deformable. When the waterproof bag 143 is not mounted on the outside of the bag holder 145, the waterproof bag 143 has a smaller size and the size of the waterproof bag 143 is smaller than that of the bag holder 145. When the waterproof bag 143 is mounted on the outside of the bag holder 145, the bag holder 145 expands the waterproof bag 143 inside the waterproof bag 143, making the waterproof bag 143 undergo elastic deformation and tend to recover its initial state. Therefore, the waterproof bag 143 can be reliably and securely mounted on the outside of the bag holder 145, and the bag holder 145 maintains the shape of waterproof bag 143. When the diver emits sound waves when speaking, the sound waves reach the waterproof bag 143 of the microphone unit 14, making the waterproof bag 143 deform with the bag holder passage 1453 of the bag holder 145 towards the bag holder space 1451 of the bag holder 145, generating vibrations in corresponding frequency. The waterproof bag 143 then agitates the air inside the transduction space 144 of the microphone unit 14, making it produce vibrations in corresponding frequency.

It is worth mentioning that the way in which the bag holder 145 and the waterproof housing 141 are installed is not limited in the anti-full-throat diving device of the present invention. For example, in some embodiments, the mounting end of the bag holder 145 and the waterproof housing 141 may be provided with mutually cooperating threaded structures to screw the bag holder 145 on the waterproof housing 141, and the connection between the bag holder 145 and the waterproof housing 141 is waterproofed to prevent water entering the breathing chamber 1111 of the mask housing 111 from entering the transduction space 144 of the microphone unit 14 through the bag holder 145 and the waterproof housing 141. In other embodiments, after a part of the waterproof housing 141 extends through the bag holder opening 1452 of the bag holder 145 to the bag holder space 1451, weld the bag holder 145 and the waterproof housing 141 by ultrasonic welding to reliably install the bag holder 145 to the waterproof housing 141 and prevent water entering the breathing chamber 1111 of the mask housing 111 from entering the transduction space 144 of the microphone unit 14 through the bag holder 145 and the waterproof housing 141.

Further referring to attached Figures 17A, 19A, 19B, 25 and 26, the microphone unit 14 further comprises a switch 146 which is set on the waterproof housing 141, and the microphone 142 is connected to the switch 146. Divers can control the working state of the microphone 142 through the switch 146. For example, the switch 146 is a push type switch, and the mask housing 111 further has a switch passage 1115 which is connected to the breathing chamber 1111. The switch 146 of the microphone unit 14 can extend from the breathing chamber 1111 of the mask housing 111 to the outside of the mask housing 111 through the switch passage 1115 of the mask housing 111, exposing the switch 146 of the microphone unit 14 on the outer wall of the mask housing 111. This makes it easier for the diver to control the working state of the microphone 142 by pressing the switch 146 when the diver wears the anti-full-throat diving device.

Further referring to attached Figures 17A, 19A, 19B, 25 and 26, the mask housing 111 further has a wire passage 1116 connected to the breathing chamber 1111. A set of wires for connecting to the circuit board 146 of the microphone unit 14 can extend from the breathing chamber 1111 of the mask housing 111 to the outside of the mask housing 111 through the wire passage 1116 of the mask housing 111. One of the wires in the set is connected to the microphone 142, and the other wire in the set is connected to the switch 146. The microphone 142 and the switch 146 are connected by another wire, so that the diver can control the working state of the microphone 142 through the switch 146.

Technicians in this field should understand that the embodiments of the present invention described above and shown in the attached figures are only taken as samples, not limited to the present invention. The purpose of the present invention has been fully and effectively achieved. The functions and structural principles of the present invention have been demonstrated and explained in the embodiments, and any modifications or variations of the embodiments of the present invention may be made without departing from the principles described.

**Claims**

1. An underwater communication device, comprising:

   a holding unit;
   a microphone unit; and
   a housing, wherein the housing features a chamber, a passage opening, an aperture, a front-facing side, and a noise reduction part, the passage opening and the aperture are respectively connected to the chamber, and the aperture defines the front-facing side, The noise reduction part is disposed on the inner wall of the housing that defines the chamber, the microphone unit is installed within the chamber of the housing, and the holding unit is mounted on the housing.

2. The underwater communication device according to claim 1, wherein the noise reduction part is a protrusion from the inner wall of the housing, so that a series of mutually spaced protrusions are arranged on the inner wall of the housing.

3. The underwater communication device according to claim 1, wherein the noise reduction part is invaginated in the groove of the inner wall of the housing, so that a series of mutually spaced grooves are arranged on the inner wall of the housing.

4. The underwater communication device according to claim 2, wherein the protrusion size of the housing decreases sequentially from the aperture of the housing towards the passage opening direction.

5. The underwater communication device according to claim 3, wherein the grooving size of the grooves of the housing decreases sequentially from the aperture of the housing towards the passage opening direction.

6. The underwater communication device according to claim 1, wherein the noise reduction part forms roughness on at least a part of the inner wall of the housing.

7. The underwater communication device according to claim 6, wherein the collected sound clarity parameter of the microphone unit is D;
   the roughness parameter of the inner wall of the housing is Ra, and the frequency parameter of the sound wave is f, among them, the collected sound clarity of the microphone, the roughness of the inner wall of the housing, and the frequency of the sound wave meet the conditions: $D = \dfrac{100 \cdot Ra}{175.4 - 0.07631 \cdot f + Ra}$.

8. The underwater communication device according to any one of claims 1 to 7, wherein the size of the housing gradually decreases outward from the front-facing side of the housing, so that the chamber of the housing gradually collapses, and the speaker unit is held at the bottom of the chamber of the housing.

9. The underwater communication device according to any one of claims 1 to 7, wherein the holding unit comprises an assembly part, a mouthpiece part, and two elastic arms, an assembly part further comprises an assembly plate and two extension arms symmetrically arranged on opposite sides of the assembly plate, and the assembly plate is mounted on the inner wall of the housing, the mouthpiece part further comprises a mounting element and two mouthpiece arms; each mouthpiece arm comprises a diagonal arm, and a straight arm set at the free end of the diagonal arm, and the diagonal arm of each mouthpiece arm extends outward from the opposite sides of the mounting element in an integrated and inclined manner, respectively, each of the elastic arms extends in a bent manner and forms an elastic outer end and an elastic inner end corresponding to the elastic outer end, the elastic outer end of each elastic arm is respectively mounted on the free end of each extension arm of the assembly part, and the elastic inner end of each elastic arm is respectively mounted on the opposite sides of the mounting element of the mouthpiece part.

10. The underwater communication device according to claims 9, wherein the straight arm is detachably mounted on the free end of the diagonal arm.

11. The underwater communication device according to claims 9, wherein the housing has a clamping part composed of a first clamping protrusion, a second clamping protrusion, and a clamping groove formed between the first clamping protrusion and the second clamping protrusion, the first clamping protrusion and the second clamping protrusion are formed on the inner wall of the housing in a mutually spaced manner, and the assembly plate of the assembly part is clamped in the clamping groove of the clamping part to install the assembly plate on the inner wall of the housing.

12. The underwater communication device according to any one of claims 1 to 7, wherein the speaker unit comprises a waterproof housing, a microphone, a waterproof bag and a transduction space, the waterproof bag is set on the waterproof housing by forming the transduction space between the waterproof bag and the waterproof housing, and the microphone is set on the waterproof housing and facing the transduction space, wherein the waterproof housing is set on the housing.

13. The underwater communication device according to claims 12, wherein the speaker unit further comprises a bag holder which has a bag holder space, a bag holder opening and a set of bag holder passages, the bag holder opening is connected to the bag holder space at the mounting end of the bag holder, and a set of bag holder passages are respectively connected to the bag holder space at the free end of the bag holder, the bag holder is mounted on the waterproof housing in such a way that a part of the waterproof housing extends through the bag holder opening to the bag holder space, the waterproof bag is attached to the outside of the bag holder and covers the bag holder passage.

14. A communication method of the underwater communication device, comprising:

(A) A housing of an underwater communication device is designed to be held in front of a diver's mouth; and
(B) When the diver remits sound waves, a part of these sound waves directly reaches the microphone unit of the underwater communication device located in the chamber of the housing, another part is reflected by the noise reduction part of the housing before reaching the microphone unit, while yet another part is directed away from the microphone unit after being reflected by the noise reduction part of the housing.

15. The communication method according to claim 14, wherein in the step (B), a part of the sound wave is captured by the noise reduction part of the housing.

16. The communication method according to claim 14, wherein in the step (B), a part of the sound waves is converged by the noise reduction part of the housing toward the microphone unit.

17. The communication method according to any one of claims 14 to 16, wherein in the Step (B), the noise reduction part forms a rough inner wall on at least a part of the inner wall of the housing, wherein the collected sound clarity parameter of the microphone unit is D; the roughness parameter of the inner wall of the housing is Ra, and the frequency parameter of the sound wave is f, and the collected sound clarity of the microphone unit, the roughness parameter of the inner wall of the housing and the frequency of the sound wave meet the conditions: $D = \dfrac{100 \cdot Ra}{175.4 - 0.07631 \cdot f + Ra}$.

18. A manufacturing method of underwater communication device, comprising:

(a) Form a noise reduction part on the inner wall of a housing for defining a chamber;
(b) Mount a microphone unit at the bottom of the chamber of the housing from an aperture for defining the front-facing side of the housing; and
(c) Install a holding unit on the housing to produce the underwater communication device.

19. The manufacturing method according to claim 18, wherein in the step (a), the inner wall of the housing is roughened to form the noise reduction part on the inner wall of the housing.

20. The manufacturing method according to claim 18, wherein in the step (a), during injection molding of the housing, at least a part of the inner wall of the housing is allowed to form mutually spaced protrusions or grooves to form the noise reduction part.

Figure 1A

Figure 1B

Figure 2

Figure 3A

Figure 3B

Figure 4

Figure 5

Figure 6A

Figure 6B

Figure 7A

Figure 7B

Figure 8A

Figure 8B

Figure 9A

Figure 9B

Figure 10A

Figure 10B

Figure 11

Figure 12

Figure 13

Figure 14A

Figure 14B

Figure 14C

Figure 15

Figure 16A

Figure 16B

Figure 17A

Figure 17B

Figure 18

Figure 19A

Figure 19B

Figure 20A

Figure 20B

Figure 21

Figure 22

Figure 23

Figure 24

Figure 25

Figure 26

## INTERNATIONAL SEARCH REPORT

| International application No. |
|---|
| **PCT/CN2023/105315** |

| A. | CLASSIFICATION OF SUBJECT MATTER |
|---|---|

H04B 13/02 (2006.01)i

According to International Patent Classification (IPC) or to both national classification and IPC

| B. | FIELDS SEARCHED |
|---|---|

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT; CNKI; WPABSC; ENTXTC; ENTXT: 面罩, 潜水, 水下, 水中, 噪声, 噪音, 降噪, 隔音, 腔室, 开口, 通道, 壁, mask, dive, underwater, noise, cavity, channel

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2021009247 A1 (SEILLIERE JEAN BAPTISTE) 14 January 2021 (2021-01-14) description, paragraphs 57-86, and figures 1-4 | 1-20 |
| A | CN 107567413 A (DECATHLON) 09 January 2018 (2018-01-09) entire document | 1-20 |
| A | CN 110435853 A (YANTAI HAIYUN DIVING EQUIPMENT CO., LTD.) 12 November 2019 (2019-11-12) entire document | 1-20 |
| A | CN 111976924 A (XIAMEN UNIVERSITY) 24 November 2020 (2020-11-24) entire document | 1-20 |
| A | KR 20220062968 A (JUNG SEUNG IL) 17 May 2022 (2022-05-17) entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 October 2023** | **23 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| | | | | |
|---|---|---|---|---|
| **INTERNATIONAL SEARCH REPORT**<br>**Information on patent family members** | | | International application No.<br><br>**PCT/CN2023/105315** | |

| Patent document<br>cited in search report | | | Publication date<br>(day/month/year) | Patent family member(s) | | | Publication date<br>(day/month/year) |
|---|---|---|---|---|---|---|---|
| US | 2021009247 | A1 | 14 January 2021 | FR | 3079205 | A1 | 27 September 2019 |
| | | | | FR | 3079205 | B1 | 28 January 2022 |
| | | | | EP | 3774521 | A1 | 17 February 2021 |
| | | | | JP | 2021519237 | A | 10 August 2021 |
| | | | | WO | 2019185203 | A1 | 03 October 2019 |
| CN | 107567413 | A | 09 January 2018 | EP | 3286072 | A1 | 28 February 2018 |
| | | | | EP | 3286072 | B1 | 14 June 2023 |
| | | | | WO | 2016170253 | A1 | 27 October 2016 |
| | | | | DE | 202016008794 | U1 | 10 September 2019 |
| | | | | US | 2018134352 | A1 | 17 May 2018 |
| | | | | US | 11667362 | B2 | 06 June 2023 |
| | | | | DE | 202016008553 | U1 | 04 June 2018 |
| | | | | FR | 3035374 | A1 | 28 October 2016 |
| | | | | FR | 3035374 | B1 | 12 May 2017 |
| | | | | ITUA | 20162757 | A1 | 20 October 2017 |
| | | | | TW | 201700350 | A | 01 January 2017 |
| | | | | TWI | 628112 | B | 01 July 2018 |
| | | | | SG | 11201708483 | XA | 29 November 2017 |
| | | | | EP | 3919367 | A1 | 08 December 2021 |
| CN | 110435853 | A | 12 November 2019 | None | | | |
| CN | 111976924 | A | 24 November 2020 | None | | | |
| KR | 20220062968 | A | 17 May 2022 | KR | 102417231 | B1 | 05 July 2022 |

Form PCT/ISA/210 (patent family annex) (July 2022)